# EUROPEAN PATENT SPECIFICATION

(11) **EP 1 567 565 B1**
(45) Date of publication and mention of the grant of the patent: **09.01.2008**
(21) Application number: 03812143.0
(22) Date of filing: 03.11.2003
(51) Int. Cl.: C08F 10/08, C08F 4/64

(54) **PROCESS FOR PREPARING 1-BUTENE POLYMERS**
VERFAHREN ZUR HERSTELLUNG VON1-BUTEN-POLYMEREN
PROCEDE DE PREPARATION DE POLYMERES DE 1-BUTENE

(30) Priority: 04.12.2002 EP 02080120; 09.12.2002 US 431803 P
(43) Date of publication of application: 31.08.2005
(73) Proprietor: Basell Polyolefine GmbH, 50389 Wesseling (DE)
(72) Inventor: RESCONI, Luigi, I-44100 Ferrara (IT); CASCIO INGURGIO, Antonio, I-90100 Palermo (IT)
(74) Representative: Sacco, Marco
(86) International application number: PCT/EP2003/012236
(87) International publication number: WO 2004/050724

(56) References cited:
- EP-A- 0 549 900
- WO-A-99/46270
- WO-A-02/100908
- US-B1- 6 479 424
- SUHM J ET AL: "Influence of metallocene structues on ethene copolymerization with 1-butene and 1-octene" JOURNAL OF MOLECULAR CATALYSIS. A, CHEMICAL, ELSEVIER, AMSTERDAM, NL, vol. 128, 1998, pages 215-227, XP002218351 ISSN: 1381-1169

## Description

The present invention relates to a process for polymerizing 1-butene by using a substituted bridged bis-indenyl metallocene compound.

1-Butene polymers are well known in the art. In view of their good properties in terms of pressure resistance, creep resistance, and impact strength, they are widely used for example in the manufacture of pipes for metal pipe replacement, easy-open packaging and films.

The 1-butene (co)polymers are generally prepared by polymerizing 1-butene in the presence of TiCl₃ based catalyst components together with diethylaluminum chloride (DEAC) as cocatalyst. In some cases mixtures of diethyl aluminum iodide (DEAI) and DEAC are used.

The polymers obtained, however, generally do not show satisfactory mechanical properties.

Furthermore, in view of the low yields obtainable with the TiCl₃ based catalysts, the 1-butene polymers prepared with these catalysts have a high content of catalyst residues (generally more than 300 ppm of Ti) which lowers the properties of the polymers and makes necessary to carry out a subsequent deashing step.

1-Butene (co)polymers can also be obtained by polymerizing the monomers in the presence of a stereospecific catalyst comprising: (A) a solid component comprising a Ti compound and an electron-donor compound supported on MgCl₂; (B) an alkylaluminum compound and, optionally, (C) an external electron-donor compound. A process of this type is disclosed in EP-A-172961 and WO99/45043.

Recently metallocene compounds have been used for producing 1-butene polymers. In Macromolecules 1995, 28, 1739-1749, rac-dimethylsilylbis(4,5,6,7-tetrahydro-1-indenyl)zirconium dichloride and methylaluminoxane have been used for polymerizing 1-butene; even if the yield of the process is not indicated, the number average molecular weight (Mn) of the obtained polymers is very low.

In Macromol. Rapid Commun. 18, 581-589 (1997) rac and meso-[dimethylsilylenebis(2,3,5-trimethyl-cyclopentadienyl)]zirconium dichloride have been used for the polymerization of 1-butene; the yields of the process and the molecular weight of the obtained polymers are rather low.

More recently, in Macromolecules 2000, 33, 1955-1956 Me₂Si(2-Me-4,5-BzoInd)₂ZrCl₂, Me₂Si(2-Me-4-PhInd)₂ZrCl₂ and Me₂Si(Ind)₂ZrCl₂ have been tested in the polymerization of 1-butene. The obtained polymers posseses molecular weights higher than the ones described in the previous documents, neverthless they can be further improved; moreover the activities of these catalysts are not satisfactory, as shown in the comparative examples of the present application.

WO 99/46270 relates to a process for synthesizing bridged metallocene complexes containing a neutral diene ligand, comprising the step of contacting a metal complex of formula MX₂D with a compound of formula (L-A-L)M"ₙ wherein M is titanium, zirconium or hafnium in the +2 formal oxidation state; M" is hydrogen, a group 1 metal cation, a group 2 metal or zinc dication and the like; L is an anionic ligand bonded to A; A is a divalent bridge; X is a monovalent anionic leaving group and D is a neutral substituted derivative of 1, 3-butadiene. In example 14, a complex of formula (d) was prepared

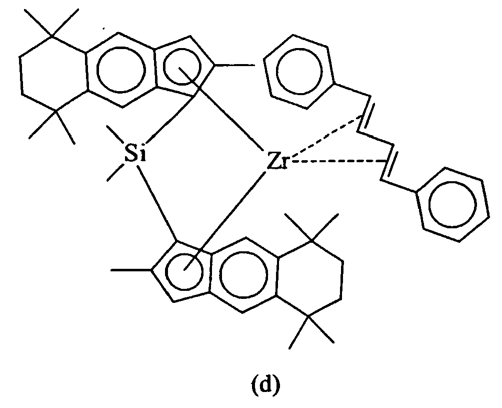

This compound is not used for polymerizing 1-butene.

Therefore it would be desirable to develop a process that allows to obtain 1-butene polymer with high molecular weight and in high yield.

An object of the present invention is a process for preparing 1-butene polymers optionally containing up to 30% by mol of units derived from at least one monomer selected from ethylene, propylene or an alpha olefin of formula CH₂=CHZ, wherein Z is a C₃-C₁₀ alkyl group, comprising polymerizing 1-butene and optionally ethylene, propylene or said alpha-olefin, in the presence of a catalyst system obtainable by contacting:
a) at least a metallocene compound of formula (I): 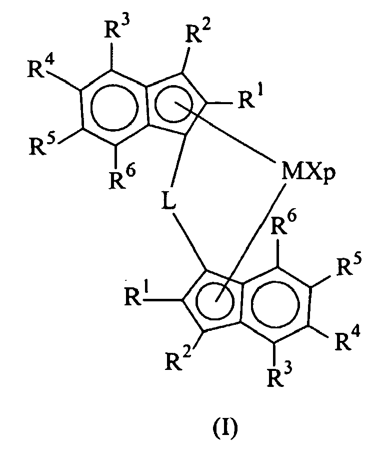 wherein:
   M is a transition metal belonging to group 3, 4, 5, 6 or to the lanthanide or actinide groups in the Periodic Table of the Elements; preferably M is titanium, zirconium or hafnium;
   p is an integer from 0 to 3, preferably p is 2, being equal to the formal oxidation state of the metal M minus 2;
   X, equal to or different from each other, are hydrogen atoms, halogen atoms, R, OR, OSO₂CF₃, OCOR, SR, NR₂ or PR₂ groups, wherein R is a linear or branched, saturated or unsaturated C₁-C₂₀ alkyl, C₃-C₂₀ cycloalkyl, C₆-C₂₀ aryl, C₇-C₂₀ alkylaryl or C₇-C₂₀ arylalkyl radical, optionally containing heteroatoms belonging to groups 13-17 of the Periodic Table of the Elements; or two X can optionally form a substituted or unsubstituted butadienyl radical or a OR'O group wherein R' is a divalent radical selected from C₁-C₂₀ alkylidene, C₆-C₄₀ arylidene, C₇-C₄₀ alkylarylidene and C₇-C₄₀ arylalkylidene radicals; preferably X is a hydrogen atom, a halogen atom or a R group; more preferably X is chlorine or a methyl radical;
   R¹, equal to or different from each other, are linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing one or more heteroatoms belonging to groups 13-17 of the Periodic Table of the Elements; preferably R¹ is a C₁-C₂₀-alkyl radical; more preferably it is a methyl or ethyl radical;
   R², R³ and R⁶, equal to or different from each other, are hydrogen atoms or linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing one or more heteroatoms belonging to groups 13-17 of the Periodic Table of the Elements; preferably R², R³ and R⁶ are hydrogen atoms;
   R⁴ and R⁵, form together a condensed saturated or unsaturaded C₃-C₇-membered ring preferably a C₄-C₆-membered ring, optionally containing heteroatoms belonging to groups 13-16 of the Periodic Table of the Elements; every atom forming said ring being substituted with R⁷ radicals; that means that the valence of each atom forming said ring is filled with R⁷ groups, wherein R⁷, equal to or different from each other, are hydrogen or linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing one or more heteroatoms belonging to groups 13-17 of the Periodic Table of the Elements; preferably R⁷ is a hydrogen atom or a linear or branched, saturated or unsaturated C₁-C₂₀-alkyl radical; more preferably it is a hydrogen atom or a methyl or ethyl radical;
   L is a divalent bridging group selected from C₁-C₂₀ alkylidene, C₃-C₂₀ cycloalkylidene, C₆-C₂₀ arylidene, C₇-C₂₀ alkylarylidene, or a C₇-C₂₀ arylalkylidene radicals, optionally containing heteroatoms belonging to groups 13-17 of the Periodic Table of the Elements, or it is a silylidene radical containing up to 5 silicon atoms; preferably L is Si(R⁸)₂ wherein R⁸ is a linear or branched, saturated or unsaturated C₁-C₂₀-alkyl, C₃-C₂₀-cycloakyl, C₆-C₂₀-aryl, C₇-C₂₀-alkylaryl or C₇-C₂₀-arylalkyl radical; more preferably L is Si(CH₃)₂ or SiPh₂;
b) at least an alumoxane or a compound able to form an alkylmetallocene cation; and
c) optionally an organo aluminum compound.

Preferably the compound of formula (I) is in the racemic (rac) form.

Preferably the compound of formula (I) has formula (IIa) or (IIb) 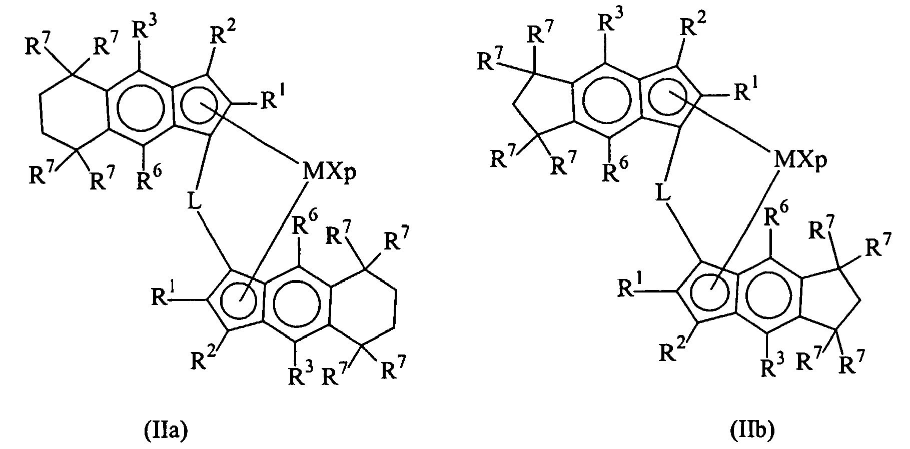 wherein:
M, X, p, L, R¹, R², R³, R⁶ and R⁷ have the meaning described above.

Compounds of formula (I) can be prepared with a process comprising the following steps:
a) contacting a ligand of formula (III) 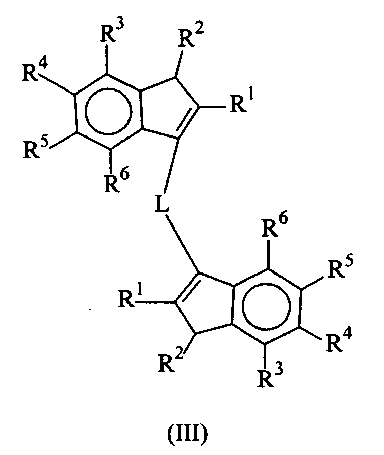 and/or its double bond isomers
   wherein R¹, R², R³, R⁴, R⁵, R⁶, and L have the meaning described above with a base selected from TⱼB, TMgT¹, sodium and potassium hydride, metallic sodium and potassium, wherein B is an alkaline or alkali-earth metal; and j is 1 or 2, j being equal to 1 when B is an alkaline metal, preferably lithium, and j being equal to 2 when B is an alkali-earth metal; T is a linear or branched, saturated or unsaturated C₁-C₂₀ alkyl, C₃-C₂₀ cycloalkyl, C₆-C₂₀ aryl, C₇-C₂₀ alkylaryl or C₇-C₂₀ arylalkyl group, optionally containing one or more Si or Ge atoms; preferably T is methyl or butyl radical; T¹ is an halogen atom or a group OR" wherein R" is a linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radical, optionally containing one or more heteroatoms belonging to groups 13-17 of the Periodic Table of the Elements; preferably T¹ is an halogen atom, more preferably bromine; wherein the molar ratio between said base and the ligand of the formula (III) and is at least 2:1; excess of said base can be used; and
b) contacting the product obtained in step a) with a compound of formula MX₄ wherein M and X have the meaning described above.

The process is preferably carried out in an aprotic solvent, either polar or apolar. Said aprotic solvent is preferably an aromatic or aliphatic hydrocarbon, optionally halogenated, or an ether; more preferably it is selected from benzene, toluene, pentane, hexane, heptane, cyclohexane, dichloromethane, diethylether, tetrahydrofurane and mixtures thereof. The above process is carried out at a temperature ranging from -100°C to +80°C, more preferably from -20°C to +70°C.

The ligands of formula (III) can be obtained with a process comprising the following steps:
a) contacting a compound of formula (IVa): 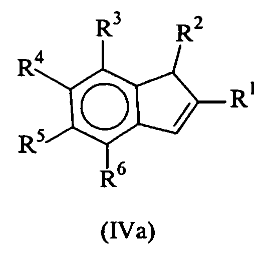 and/or its double bond isomer
   wherein R¹, R², R³, R⁴, R⁵ and R⁶ are defined as above;
   with a base selected from TⱼB, TMgT¹ , sodium and potassium hydride, metallic sodium and potassium; wherein T, j, B and T¹ are defined as above, and wherein the molar ratio between said base and the compound of the formula (IVa) is at least 1:1; excess of said base can be used;
b) contacting the anionic compound obtained in step a) with a compound of formula (IVb): 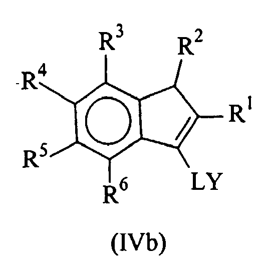 wherein R¹, R², R³, R⁴, R⁵, R⁶ and L are defined as above and Y is chlorine, bromine and iodine, preferably Y is chlorine or bromine.

When the indenyl moieties are the same, i.e. the substituents R¹, R², R³, R⁴, R⁵ and R⁶ are the same on both the indenyl moieties, an alternative process for preparing the ligand of formula (III) comprises the following steps:
a) contacting a compound of formula (IVa): 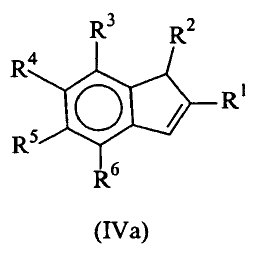 and/or its double bond isomer
   wherein R¹, R², R³, R⁴, R⁵ and R⁶ are defined as above; with a base selected from TⱼB, TMgT¹, sodium and potassium hydride, metallic sodium and potassium; wherein T, j, B, and T¹ are defined as above, and wherein the molar ratio between said base and the compound of the formula (IVa) is at least 1:1, excess of said base can be used;
b) reacting the product obtained in step a) with a compound of formula YLY, wherein L and Y are defined as above, wherein the molar ratio between the compound obtained in step a) and the compound of formula YLY is at least 2:1; excess of the compound obtained instep a) can be used.

Alumoxanes used as component b) can be obtained by reacting water with an organoaluminium compound of formula HⱼAlU₃₋ⱼ or HⱼAl₂U₆₋ⱼ, where the U substituents, same or different, are hydrogen atoms, halogen atoms, C₁-C₂₀-alkyl, C₃-C₂₀-cyclalkyl, C₆-C₂₀-aryl, C₇-C₂₀-alkylaryl or C₇-C₂₀-arylalkyl radicals, optionally containing silicon or germanium atoms, with the proviso that at least one U is different from halogen, and j ranges from 0 to 1, being also a non-integer number. In this reaction the molar ratio of Al/water is preferably comprised between 1:1 and 100:1.

The molar ratio between aluminium and the metal of the metallocene is generally comprised between about 10:1 and about 30000:1, preferably between about 100:1 and about 5000:1.

The alumoxanes used in the catalyst according to the invention are considered to be linear, branched or cyclic compounds containing at least one group of the type: 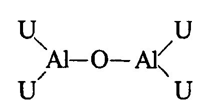 wherein the substituents U, same or different, are defined above.

In particular, alumoxanes of the formula: 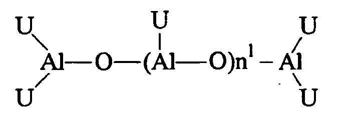 can be used in the case of linear compounds, wherein n¹ is 0 or an integer of from 1 to 40 and the substituents U are defined as above; or alumoxanes of the formula: 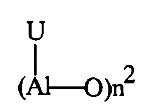 can be used in the case of cyclic compounds, wherein n² is an integer from 2 to 40 and the U substituents are defined as above.

Examples of alumoxanes suitable for use according to the present invention are methylalumoxane (MAO), tetra-(isobutyl)alumoxane (TIBAO), tetra-(2,4,4-trimethylpentyl)alumoxane (TIOAO), tetra-(2,3-dimethylbutyl)alumoxane (TDMBAO) and tetra-(2,3,3-trimethylbutyl)alumoxane (TTMBAO).

Particularly interesting cocatalysts are those described in WO 99/21899 and in WO01/21674 in which the alkyl and aryl groups have specific branched patterns.

Non-limiting examples of aluminium compounds that can be reacted with water to give suitable alumoxanes (b), described in WO 99/21899 and WO01/21674, are:
tris(2,3,3-trimethyl-butyl)aluminium, tris(2,3-dimethyl-hexyl)aluminium, tris(2,3-dimethylbutyl)aluminium, tris(2,3-dimethyl-pentyl)aluminium, tris(2,3-dimethyl-heptyl)aluminium, tris(2-methyl-3-ethyl-pentyl)aluminium, tris(2-methyl-3-ethyl-hexyl)aluminium, tris(2-methyl-3-ethyl-heptyl)aluminium, tris(2-methyl-3-propyl-hexyl)aluminium, tris(2-ethyl-3-methyl-butyl)aluminium, tris(2-ethyl-3-methyl-pentyl)aluminium, tris(2,3-diethyl-pentyl)aluminium, tris(2-propyl-3-methyl-butyl)aluminium, tris(2-isopropyl-3-methyl-butyl)aluminium, tris(2-isobutyl-3-methyl-pentyl)aluminium, tris(2,3,3-trimethylpentyl)aluminium, tris(2,3,3-trimethyl-hexyl)aluminium, tris(2-ethyl-3,3-dimethylbutyl)aluminium, tris(2-ethyl-3,3-dimethyl-pentyl)aluminium, tris(2-isopropyl-3,3-dimethylbutyl)aluminium, tris(2-trimethylsilyl-propyl)aluminium, tris(2-methyl-3-phenylbutyl)aluminium, tris(2-ethyl-3-phenyl-butyl)aluminium, tris(2,3-dimethyl-3-phenylbutyl)aluminium, tris(2-phenyl-propyl)aluminium, tris[2-(4-fluoro-phenyl)-propyl]aluminium, tris[2-(4-chloro-phenyl)-propyl]aluminium, tris[2-(3-isopropyl-phenyl)-propyl]aluminium, tris(2-phenyl-butyl)aluminium, tris(3-methyl-2-phenyl-butyl)aluminium, tris(2-phenyl-pentyl)aluminium, tris[2-(pentafluorophenyl)-propyl]aluminium, tris[2,2-diphenyl-ethyl]aluminium and tris[2-phenyl-2-methyl-propyl]aluminium, as well as the corresponding compounds wherein one of the hydrocarbyl groups is replaced with a hydrogen atom, and those wherein one or two of the hydrocarbyl groups are replaced with an isobutyl group.

Amongst the above aluminium compounds, trimethylaluminium (TMA), triisobutylaluminium (TIBA), tris(2,4,4-trimethyl-pentyl)aluminium (TIOA), tris(2,3-dimethylbutyl)aluminium (TDMBA) and tris(2,3,3-trimethylbutyl)aluminium (TTMBA) are preferred.

Non-limiting examples of compounds able to form an alkylmetallocene cation are compounds of formula D⁺E⁻, wherein D⁺ is a Brønsted acid, able to donate a proton and to react irreversibly with a substituent X of the metallocene of formula (I) and E⁻ is a compatible anion, which is able to stabilize the active catalytic species originating from the reaction of the two compounds, and which is sufficiently labile to be removed by an olefinic monomer. Preferably, the anion E⁻ comprises one or more boron atoms. More preferably, the anion E⁻ is an anion of the formula BAr₄⁽⁻⁾, wherein the substituents Ar which can be identical or different are aryl radicals such as phenyl, pentafluorophenyl or bis(trifluoromethyl)phenyl. Tetrakis-pentafluorophenyl borate is particularly preferred compound, as described in WO 91/02012. Moreover, compounds of formula BAr₃ can be conveniently used. Compounds of this type are described, for example, in the International patent application WO 92/00333. Other examples of compounds able to form an alkylmetallocene cation are compounds of formula BAr₃P wherein P is a substituted or unsubstituted pyrrol radical. These compounds are described in WO01/6276 Compounds containing boron atoms can be conveniently supported according to the description of DE-A-19962814 and DE-A-19962910. All these compounds containing boron atoms can be used in a molar ratio between boron and the metal of the metallocene comprised between about 1:1 and about 10:1; preferably 1:1 and 2.1; more preferably about 1:1.

Non limiting examples of compounds of formula D⁺E⁻ are:
Triethylammoniumtetra(phenyl)borate,
Tributylammoniumtetra(phenyl)borate,
Trimethylammoniumtetra(tolyl)borate,
Tributylammoniumtetra(tolyl)borate,
Tributylammoniumtetra(pentafluorophenyl)borate,
Tributylammoniumtetra(pentafluorophenyl)aluminate,
Tripropylammoniumtetra(dimethylphenyl)borate,
Tributylammoniumtetra(trifluoromethylphenyl)borate,
Tributylammoniumtetra(4-fluorophenyl)borate,
N,N-Dimethylbenzylammonium-tetrakispentafluorophenylborate,
N,N-Dimethylhexylamonium-tetrakispentafluorophenylborate,
N,N-Dimethylaniliniumtetra(phenyl)borate,
N,N-Diethylaniliniumtetra(phenyl)borate,
N,N-Dimethylaniliniumtetrakis(pentafluorophenyl)borate,
N,N-Dimethylaniliniumtetrakis(pentafluorophenyl)aluminate,
N,N-Dimethylbenzylammonium-tetrakispentafluorophenylborate,
N,N-Dimethylhexylamonium-tetrakispentafluorophenylborate,
Di(propyl)ammoniumtetrakis(pentafluorophenyl)borate,
Di(cyclohexyl)ammoniumtetrakis(pentafluorophenyl)borate,
Triphenylphosphoniumtetrakis(phenyl)borate,
Triethylphosphoniumtetrakis(phenyl)borate,
Diphenylphosphoniumtetrakis(phenyl)borate,
Tri(methylphenyl)phosphoniumtetrakis(phenyl)borate,
Tri(dimethylphenyl)phosphoniumtetrakis(phenyl)borate,
Triphenylcarbeniumtetrakis(pentafluorophenyl)borate,
Triphenylcarbeniumtetrakis(pentafluorophenyl)aluminate,
Triphenylcarbeniumtetrakis(phenyl)aluminate,
Ferroceniumtetrakis(pentafluorophenyl)borate,
Ferroceniumtetrakis(pentafluorophenyl)aluminate.
Triphenylcarbeniumtetrakis(pentafluorophenyl)borate, and
N,N-Dimethylaniliniumtetrakis(pentafluorophenyl)borate.

Organic aluminum compounds used as compound c) are those of formula HⱼAlU₃₋ⱼ or HⱼAl₂U₆₋ⱼ as described above.

The polymerization process of the present invention can be carried out in liquid phase. The polymerization medium can be 1-butene optionally in the presence of an inert hydrocarbon solvent. Said hydrocarbon solvent can be either aromatic (such as toluene) or aliphatic (such as propane, hexane, heptane, isobutane, cyclohexane and 2,2,4-trimethylpentane). Otherwise the polymerization process of the present invention can be carried out in a gas phase. Preferably the polymerization is carried out by using liquid 1-butene i.e. the monomer, as the polymerization medium (bulk polymerization).

The catalyst system of the present invention can also be supported on an inert carrier. This is achieved by depositing the metallocene compound a) or the product of the reaction thereof with the component b), or the component b) and then the metallocene compound a) on an inert support such as, for example, silica, alumina, Al-Si, Al-Mg mixed oxides, magnesium halides, styrene/divinylbenzene copolymers, polyethylene or polypropylene. The supportation process is carried out in an inert solvent, such as hydrocarbon selected from toluene, hexane, pentane and propane and at a temperature ranging from 0°C to 100°C, more from 30°C to 60°C.

A particularly suitable process for supporting the catalyst system is described in WO01/44319, wherein the process comprises the steps of:
(a) preparing a catalyst solution comprising a soluble catalyst component;
(b) introducing into a contacting vessel:
   (i) a porous support material in particle form, and
   (ii) a volume of the catalyst solution not greater than the total pore volume of the porous support material introduced;
(c) discharging the material resulting from step (b) from the contacting vessel and suspending it in an inert gas flow, under such conditions that the solvent evaporates; and
(d) reintroducing at least part of the material resulting from step (c) into the contacting vessel together with another volume of the catalyst solution not greater than the total pore volume of the reintroduced material.

A suitable class of supports comprises porous organic supports functionalized with groups having active hydrogen atoms. Particularly suitable are those in which the organic support is a partially crosslinked styrene polymer. Supports of this type are described in EP 633 272.

Another class of inert supports particularly suitable for use according to the invention is that of polyolefin porous prepolymers, particularly polyethylene.

A further suitable class of inert supports for use according to the invention is that of porous magnesium halides, such as those described in WO 95/32995.

The polymerization temperature preferably ranges from 0°C to 250°C; preferably comprised between 20°C and 150°C and, more particularly between 40°C and 90°C.

Generally, the polymers of the present invention are endowed with a narrow molecular weight distribution M_{w}/Mₙ, when the metallocene used is a pure isomer, M_{w}/Mₙ is preferably lower than 3, more preferably lower than 2.5.

The molecular weight distribution can be varied by using mixtures of different metallocene compounds or mixtures of the metallocene compound of formula (I) and a Ziegler-Natta catalyst or by carrying out the polymerization in several stages at different polymerization temperatures and/or different concentrations of the molecular weight regulators and/or different monomer concentration.

The polymerization yield depends on the purity of the transition metal organometallic catalyst compound (the metallocene compound of formula (I)) a) in the catalyst, therefore, said compound can be used as such or can be subjected to purification treatments before use.

With the process of the present invention 1-butene can be homopolymerized with high yields and the isotactic polymers obtained show a high molecular weight and a relatively low melting point. The obtained polymer is endowed with improved flexibility and elongation at break.

When 1-butene is copolymerized with ethylene, propylene or an alpha olefin of formula CH₂=CHZ wherein Z is a C₃-C₁₀ alkyl group a copolymer having a comonomer derived unit content up to 30% by mol can be obtained. Preferably the comonomer content ranges from 0.5 to 20% by mol. Preferred comonomers are ethylene, propylene or 1-hexene.

A further object of the present invention is a metallocene compound of formula (IIb): 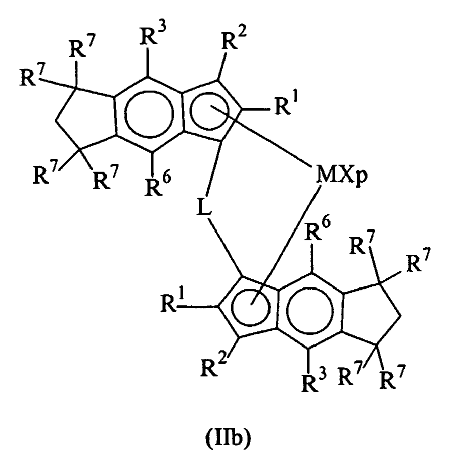 wherein M, p, L, R¹, R², R³, R⁶, R⁷ and X have the meaning described above.

The metallocene compounds of formula (IIb) can be prepared according to the process described above starting from the ligand of formula (V) or its corresponding double bond isomers: 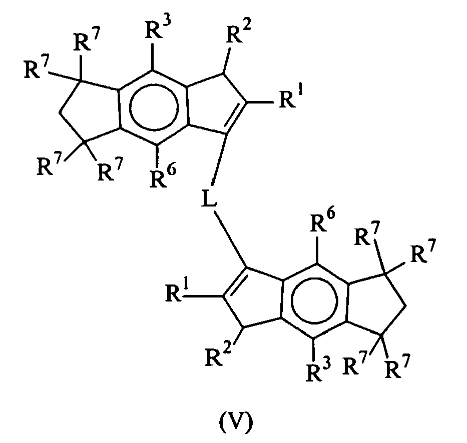 wherein L, R¹, R², R³, R⁶, and R⁷ are described above; preferably R¹ is a C₁-C₂₀-alkyl radical; more preferably it is a methyl or ethyl radical; R², R³ and R⁶ are preferably hydrogen atoms; preferably R⁷ is a linear or branched, saturated or unsaturated C₁-C₂₀-alkyl radical; more preferably it is a methyl or ethyl radical; preferably L is Si(R⁸)₂ wherein R⁸ is a linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radical; more preferably L is Si(CH₃)₂ or SiPh₂. Instead of using the ligand of formula (III)

Thus it is a further object of the present invention a process for preparing the metallocene compounds of formula (IIb) comprising the following steps:
a) contacting a ligand of formula (V) 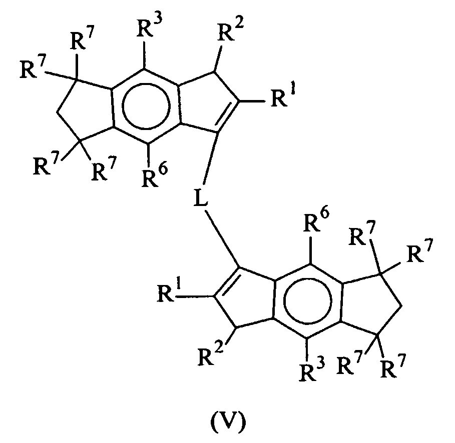 and/or its double bond isomer
   wherein: R¹, R², R³, R⁵, R⁶, R⁷ and L are described above with a base of formula TⱼB or TMgT¹ , or sodium or potassium hydride, or metallic sodium or potassium; wherein B is an alkaline or alkali-earth metal; and j is 1 or 2, j being equal to 1 when B is an alkaline metal, and j being equal to 2 when B is an alkali-earth metal; T is selected from the group consisting of linear or branched, saturated or unsaturated C₁-C₂₀ alkyl, C₃-C₂₀ cycloalkyl, C₆-C₂₀ aryl, C₇-C₂₀ alkylaryl or C₇-C₂₀ arylalkyl groups, optionally containing one or more Si or Ge atoms; T¹ is an halogen atom or a group OR" wherein R" is a linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing one or more heteroatoms belonging to groups 13-17 of the Periodic Table of the Elements; wherein the molar ratio between said base and the ligand of the formula (V) is at least 2:1; excess of said base can be used;and
b) contacting the product obtained in step a) with a compound of formula MX₄ wherein M and X have been described above.

The compound of formula (V) can be prepared starting from the compounds of formula (VI) and (VII) 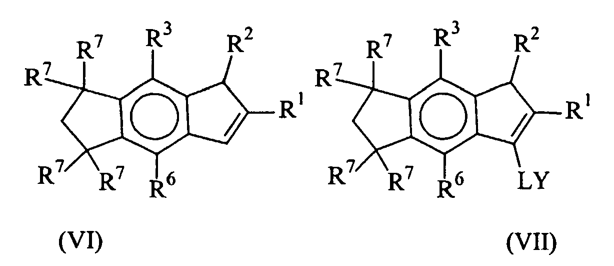 according to the processes described above by using the compounds of formulas (VI) and (VII) instead of the compound of formulas (IVa) and (IVb).

Thus it is a further object of the present invention is a process for preparing the ligand of formula (V) comprising the following steps:
a) contacting a compound of formula (VI): 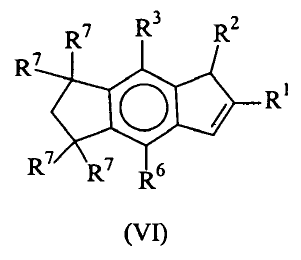 or its double bonds isomer
   wherein: R¹, R², R³ R⁶, and R⁷ are described above;
   with a base of formula TⱼB or TMgT¹ , or sodium or potassium hydride, or metallic sodium or potassium; wherein T, j, B, and T¹ are described above, wherein the molar ratio of said base and the compound of the formula (VI) is at least 1:1; excess of said base can be used;
b) contacting the anionic compounds obtained in step a) with a compound of formula (VII): 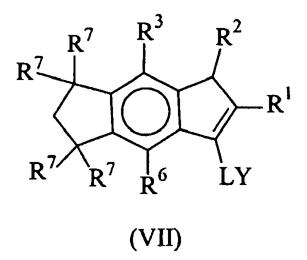 or its double bonds isomer
   wherein R¹, R², R³, R⁶, R⁷ and L are described above and Y is a halogen radical selected from the group consisting of chloride, bromide and iodide.

When the substituents R¹, R², R³, R⁴, R⁵ and R⁶ are the same in both the indenyl moieties an alternative process for preparing the ligand of formula (V) comprises the following steps:
a) contacting a compound of formula (VI): 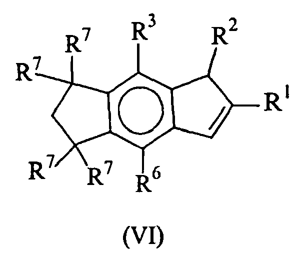 or its double bonds isomer
   wherein: R¹, R², R³, R⁶, R⁷ and L are described above; with a base of formula TⱼB or TMgT¹ , or sodium or potassium hydride, or metallic sodium or potassium; wherein T, j, B, and T¹ are described above, wherein the molar ratio between said base and the compound of the formula (VI) is at least 1:1; excess of said base can be used; and
b) reacting the product obtained in step a) with a compound of formula YLY, wherein L and Y are described above wherein the molar ratio between the compound obtained in step a) and the compound of formula YLY is at least 2:1; excess of compound obtained in step a) can be used.

The following examples are given for illustrative purpose and do not intend to limit the invention.

### EXAMPLES

### General procedures

All operations were performed under nitrogen by using conventional Shlenk-line techniques. Solvents were purified by degassing with nitrogen and passing over activated Al₂O₃ and stored under nitrogen. All compounds were analyzed by ¹H-NMR and ¹³C-NMR on a DPX 200 Bruker spectrometer (CDCl₃, referenced against the peak of residual CHCl₃ at 7.25 ppm). Due to the low solubility of the Zirconocene, the ¹³C-NMR spectra of this compound were performed on a Bruker DPX 400 in CD₂Cl₄ at 120° C.

### Example 1

### Synthesis of Me₂Si[2-Me-5,6(tetramethylcyclotrymethylen)indenyl]₂ZrCl₂ [A1]

### Synthesis of 1,1,3,3-Tetramethylindane

A mixture of 117.26 g of α-Methylstyrene (Aldrich 99 %, 0.98 mol) and 73.0 g of t-Butanol (Aldrich 99 %, 0.97 mol) were slowly added (1 hour) to a mixture of 200 g of acetic acid and 200 g of sulfuric acid, previously warmed at 40° C. The suspension so-obtained was stirred 30 min at 40° C and then the 2 layers were separated. The organic layer was washed with a 0.7 M NaOH acqueous solution (3 x 50 ml, neutrality) and water (2 x 50 ml). The opaque yellow solution obtained was then distilled at 26 mbar. At about 100° C a colourless transparent liquid was distilled off (28.43 g), which was characterized by NMR as pure 1,1,3,3 tetramethylindane (16,6 % yield).
¹H-NMR (CDCl₃, δ, ppm): 1.39 (s, C*H*₃, H**8** and H**9**, 12H); 1.99 (s, C*H*₂, H**2**, 2H); 7.17-7.30 (m, Ar, H**4**, H**5**, H**6** and H**7**, 4H).
¹³C-NMR (CDCl₃, δ, ppm): 31.56 (CH₃, C**8** and C**9**, 4C); 42.51 (*C*, C**1** and C**3**, 2C); 56.60 (*C*H₂, C**2**, 1C) ; 122.45 and 126.69 (Ar, C**4**, C**5**, C**6** and C**7**, 4C); 151.15 (Ar, C**3a** and C**7a**, 2C).

### Synthesis of 2,5,5,7,7-Pentamethyl-2,3,5,6,7-pentahydro-s-indacen-1-one

50.71 g of AlCl₃ (Aldrich 99 %, 376.5 mmol) were slowly added (30 min) to a mixture of 28.43 g of 1,1,3,3 tetramethylindane (163.1 mmol), 38.32 g of 2-Bromoisobutyryl bromide (Aldrich 98 %, 163.3 mmmol) and 500 ml of CH₂Cl₂ at 0° C. The solution colour turned yellow and finally dark red. The suspension was stirred 17 hours at room temperature and then quenched with 200 g of ice. The green organic layer was washed with a I M HCl acqueous solution (1 x 200 ml), a saturated NaHCO₃ solution (2 x 200 ml) and water (2 x 200 ml). Then it was dried over Na₂SO₄, filtered and evaporated to dryness under reduced pressure to give 38.23 g (96.7 % yield) of a green solid. This solid was determined by GC-MS to contain 76.7 % of the desired product. This was treated with 50 ml of MeOH and filtered. The white residue was washed with MeOH and dried to obtain 20.28 g of a white powder. The filtrate was stored at -20° C, to obtain 3.95 g of a white powder, collected with the previous one. This powder was characterized by NMR as pure 2,5,5,7,7-Pentamethyl-2,3,5,6,7-pentahydro-s-indacen-1-one. The yield on the isolated pure product was 61.3 %.
¹H-NMR (CDCl₃, δ, ppm): 1.27 (s, C*H*₃, H**9**, 3H); 1.31 (s, C*H*₃, H**11**, 6H); 1.33 (s, C*H*₃, H**10**, 6H); 1.95 (s, C*H*₂, H**6**, 2H),; 2.62-2.79 (m, C*H*₂ and C*H*, H**2** and H**3**, 2H); 3.28-3.37 (m, C*H*₂, H**3**, 1H); 7.15 (s, Ar, H**4**, 1H); 7.51 (s, Ar, H**8**, 1H).
¹³C-NMR (CDCl₃, δ, ppm)_{:} 16.34 (*C*H₃, C**9**, 1C); 31.28, 31.30 (*C*H₃, C**10**, 2C); 31.50, 31.55 (*C*H₃, C**11**, 2C); 34.73 (*C*H₂, C**3**, 1C); 41.86 (*C*, C**7**, 1C); 42.38 (*C*H, C**2**, 1C); 42.52 (*C*, C**5**, 1C); 56.44 (*C*H₂, C**6**, 1C); 117.87 (Ar, C**8**, 1C); 120.22 (Ar, C**4**, 1C); 135.67 (Ar, C**8a**, 1C); 151.69 (Ar, C**7a**, 1C); 152.91 (Ar, C**3a**, 1C); 159.99 (Ar, C**4a**, 1C); 208.96 (*C*=O, C**1**, 1C).

### Synthesis of 2,5,5,7,7-Pentamethyl-1,2,3,5,6,7-hexahydro-s-indacen-1-ol

A suspension of 2.70 g of pure 2,5,5,7,7-Pentamethyl-2,3,5,6,7-pentahydro-s-indacen-1-one (11.1 mmol) in 15 ml of Ethanol was treated with 0.46 g of NaBH₄ (Aldrich 98 %, 11.9 mmol) at room temperature. An opaque yellowish solution was obtained. After 18 hours stirring at room temperature, the solution was treated with 2 ml of acetone and then evaporated to dryness under reduced pressure. The yellowish gel obtained was treated with 35 ml of toluene and 35 ml of water. The two layers were separated. The acqueous layer was washed with 20 ml of toluene. The organic layer was washed with a 10 % NH₄Cl acqueous solution (2 x 20 ml), dried over Na₂SO₄ and filtered. The filtrate was evaporated to dryness under reduced pressure to give 2.54 g of a white powder (93.7 % yield), which was characterized by NMR as pure 2,5,5,7,7-Pentamethyl-1,2,3,5,6,7-hexahydro-*s-*indacen-1-ol. Owing to the presence of 2 chiral centers (carbons C**1** and C2), this sample is characterized by the presence of 2 isomers: indicated with A and B. The A:B ratio observed by ¹H-NMR spectrum was 60:40.
¹H-NMR (CDCl₃, δ, ppm): 1.17 (d, C*H*₃, H**9**, 3H, J=6.85, isomer B); 1.27 (d, C*H*₃, H**9**, 3H, J=6.85, isomer A); 1.31 (s, C*H*₃, H**10** and H**11**, 12H, isomer A and B); 1.48 (d, O*H*, 1H, J=6.85, isomer A); 1.80 (d, O*H*, 1H, J=6.85, isomer B); 1.93 (s, C*H*₂, H**6**, 2H, isomer A and B); 2.17-3.13 (m, *C*H and C*H*₂, H**2** and H**3**, 3H, isomer A and B); 4.69 (t, *C*H, H**1**, 1H, J=7.24, isomer A); 4.95 (t, *C*H, H**1**, 1H, J=8.57, isomer B); 6.95 (s, Ar, H**4**, 1H, isomer A); 6.97 (s, Ar, H**4**, 1H, isomer B); 7.14 (s, Ar, H**8**, 1H, isomer A); 7.17 (s, Ar, H**8**, 1H, isomer B).
¹³C-NMR (CDCl₃, δ, ppm): 13.88 (*C*H₃, C**9**, 1C, isomer B); 17.87 (*C*H₃, C**9**, 1C, isomer A); 31.58, 31.65, 31.69, 31.75 (*C*H₃, C**10** and C**11**, 4C, isomer A and B); 37.64-37.75 (*C*H₂, C**3**, 1C); 39.62 (*C*H, C**2**, 1C, isomer B); 42.11-42.16 (*C*, C**5** and C**7**, 2C, isomer A and B); 45.99 (*C*H, C**2**, 1C, isomer A); 56.89 (*C*H₂, C**6**, 1C); 77.51 (*C*-OH, C**1**, 1C, isomer B); 82.78 (*C*-OH, C**1**, 1C, isomer A); 117.80, 118.62, 118.80 (Ar, C**4** and C**8**, 2C, isomer A and B); 140.68-152.10 (Ar, C**3a**, C**4a**, C**7a**, C**8a**).

### Synthesis of 1,1,3,3,6-Pentamethyl-1,2,3,5-tetrahydro-s-indacene

A suspension of 24.36 g of pure 2,5,5,7,7-Pentamethyl-2,3,5,6,7-pentahydro-s-indacen-1-one (100.5 mmol) in 100 ml of Ethanol was treated with 4.06 g of NaBH₄ (Aldrich 98 %, 105,2 mmol) at room temperature. An opaque yellowish solution was obtained. After 4 hours stirring at room temperature, the solution was treated with 5 ml of acetone and then evaporated to dryness under reduced pressure. The yellowish gel obtained was treated with 100 ml of toluene and 40 ml of water. The two layers were separated. The acqueous layer was washed with 50 ml of toluene. The organic layer was washed with a 10 % NH₄Cl acqueous solution (2 x 30 ml), dried over Na₂SO₄ and filtered. The yellow filtrate was treated with 1.89 g of *p*-Toluenesulfonic acid monohydrate (Aldrich 98.5 %, 9.8 mmol) and heated to 80° C. Formation of water with the separation of 2 layers was observed. After 5 hours stirring at 80° C and 2 days at room temperature, the reaction was not finished (11 % of alcohol), so the water formed was separated from the reaction mixture and 0.20 g of p-Toluenesulfonic acid monohydrate (Aldrich 98.5 %, 1,0 mmol) were added. After 1 hour stirring at 80° C and 16 hours at room temperature, the reaction was complete and so the mixture was treated with 50 ml of a saturated NaHCO₃ acqueous solution. The organic layer was separated, washed with a saturated NaHCO₃ acqueous solution (1 x 50 ml) and water (3 x 50 ml), dried over Na₂SO₄ and filtered. The yellow filtrate was evaporated to dryness under reduced pressure to give 20.89 g of a yellow liquid (91.8 % yield), that crystallized after few minutes. This was characterized by NMR as pure 1,1,3,3,6-Pentamethyl-1,2,3,5-tetrahydro-*s*-indacene.
¹H-NMR (CDCl₃, δ, ppm): 1.38 (s, C*H*₃, H**9** e H**10**, 12H); 2.00 (s, C*H*₂, H**2**, 2H); 2.18 (bs, C*H*₃, H**11**, 3H); 3.30 (s, C*H*₂, H**5**, 2H); 6.51 (s, *C*H, H**7**, 1H); 7.06 (s, Ar, H**8**, 1H); 7.18 (s, Ar, H**4**, 1H).
¹³C-NMR (CDCl₃, δ, ppm): 16.81 (*C*H₃, C**11**, 1C); 31.77 (*C*H₃, C**9** e C**10**, 4C); 42.08, 42.16 (*C*, C**1** e C**3**, 2C); 42.28 (*C*H₂, C**5**, 1C); 57.04 (*C*H₂, C**2**, 1C); 113.61 (Ar, C**8**, 1C); 117.55 (Ar, C**4**, 1C); 127.13 (*C*H, C**7**, 1C); 142.28 (Ar, C**4a**, 1C); 145.00, 145.26 (Ar and *C*=, C**7a** and C**6**, 2C); 146.88 (Ar, C**3a**, 1C); 149.47 (Ar, C**8a**, 1C).

### dimethyl-bis-(2,5,5,7,7-pentamethyl-1,5,6,7-tetrahydro-s-indacen-1-yl)-silane

8.8 ml of a 2.5 M BuLi diethyl ether solution (Aldrich, 22.0 mmol) were slowly added to a solution of 4.99 g of 1,1,3,3,6-Pentamethyl-1,2,3,5-tetrahydro-*s*-indacene (22.0 mmol) in 65 ml of diethyl ether at 0° C. The yellow suspension formed was then stirred at room temperature. ¹H-NMR showed the complete formation of the lithium salt after 1 hour. So a solution of 1.51 g of Dimethyldichloro silane (Fluka 99 %, 11.6 mmol) in 30 ml of THF was added to the reaction mixture at 0° C. The clear yellow suspension was then stirred at room temperature for 20 hours. Then the suspension was evaporated to dryness under reduced pressure, to give a yellow sticky solid. This was treated with 70 ml of toluene and filtered. The white residue on the frit was washed twice with 20 ml of toluene. The yellow filtrate was evaporated to dryness under reduced pressure, to give 5.67 g of a yellow sticky solid, containing the desired product (rac:meso = 20:80), some starting indene (11 % respect to the product) and some other unkown products. This solid was treated with 20 ml of pentane to form a pale yellow solution with a white precipitate, which was filtered and dried. 0.53 g of a white powder were obtained, which was characterized by NMR as pure *rac*-dimethyl-bis-(2,5,5,7,7-pentamethyl-1,5,6,7-tetrahydro-*s*-indacen-1-yl)-sliane. The filtrate was concentrated to 10 ml and cooled at -20° C. After 20 hours a white solid (2.27 g g) was separated from the solution, which was characterized by NMR as pure dimethyl-bis-(2,5,5,7,7-pentamethyl-1,5,6,7-tetrahydro-*s*-indacen-1-yl)-silane (rac:meso=10:90). Other 1.12 g of pure product were then crystallized. Total yield on the pure isolated product was 57.0 %.
*Rac* isomer
¹H-NMR (CDCl₃, δ, ppm): -0.23 (s, Si-C*H*₃, 6H); 1.32 (s, C*H*₃, H**11**, 12H); 1.37, 1.38 (s, C*H*₃, H**10**, 12H); 1.97 (s, C*H*₂, H**6**, 4H); 2.19 (bs, C*H*₃, H**9**, 6H); 3.62 (s, C*H*, H**1**, 2H); 6.58 (s, C*H*, H**3**, 2H); 7.10 (s, Ar, H**4**, 2H); 7.27 (s, Ar, H**8**, 2H).
¹³C-NMR (CDCl₃, δ, ppm): -5.52 (Si-*C*H₃, 2C); 17.90 (*C*H₃, C**9**, 2C); 31.68, 31.80, 31.98 (*C*H₃, C**10** e C**11**, 8C); 42.06, 42.13 (*C*, C**5** e C**7**, 4C); 46.69 (*C*H, C**1**, 2C); 57.13 (*C*H₂, C**6**, 2C); 113.60 (Ar, C**4**, 2C); 117.15 (Ar, C**8**, 2C); 126.69 (*C*H, C**3**, 2C); 143.78 (Ar, C**8a**, 2C); 144.40 (Ar, C**3a**, 2C); 146.19 (*C*=, C**2**, 2C); 146.35 (Ar, C**7a**, 2C); 148.63 (Ar, C**4a**, 2C).
*Meso* isomer
¹H-NMR (CDCl₃, δ, ppm): -0.29, -0.16 (s, Si-C*H*₃, 6H); 1.28, 1.30 (s, C*H*₃, H**11**, 12H); 1.32, 1.33 (s, C*H*₃, H**10**, 12H); 1.93 (s, C*H*₂, H**6**, 4H); 2.16 (bs, C*H*₃, H**9**, 6H); 3.51 (s, C*H*, H**1**, 2H); 6.57 (s, C*H*, H**3**, 2H); 7.06 (s, Ar, H**4**, 2H); 7.08 (s, Ar, H**8**, 2H).
¹³C-NMR (CDCl₃, δ, ppm): -5.04, -4.67 (Si-*C*H₃, 2C); 17.83 (*C*H₃, C**9**, 2C); 31.70, 31.79, 31.96 (*C*H₃, C**10** e C**11**, 8C); 42.05, 42.12 (*C*, C**5** e C**7**, 4C); 46.55 (*C*H, C**1**, 2C); 57.10 (*C*H₂, C**6**, 2C); 113.59 (Ar, C**4**, 2C); 117.29 (Ar, C**8**, 2C); 126.59 (*C*H, C**3**, 2C); 143.88 (Ar, C**8a**, 2C); 144.27 (Ar, C**3a**, 2C); 146.33 (*C*=, C**2**, 2C); 146.53 (Ar, C**7a**, 2C); 148.62 (Ar, C**4a**, 2C).

### Synthesis of Me₂Si[2-Me-5,6(tetramethylcyclotrimethylen)indenyl]₂ZrCl₂ [A1]

1.39 ml of a 1.5 M MeLi diethyl ether solution (Aldrich, 2.1 mmol) were slowly added to a suspension of 0.53 g of pure *rac*-dimethyl-bis-(2,5,5,7,7-pentamethyl-1,5,6,7-tetrahydro-*s-*indacen-1-yl)-silane (1.0 mmol) in 10 ml of diethyl ether at 0° C. After 90 min stirring at room temperature, the pale yellow suspension was added to a suspension of 0.25 g of ZrCl₄ (Aldrich, 1.1 mmol) in 10 ml of Pentane at 0° C. A yellow suspension was formed. After 20 hours stirring at room temperature ¹H-NMR analysis showed the formation of the desired product (rac:meso = 95:5,). The rac isomer was used for the polymerization tests.
*Rac* isomer
¹-NMR (CDCl₃, δ, ppm): 1.22, 1.31 (s, C*H*₃, H**11**, 12H); 1.28 (s, Si-C*H*₃, 6H); 1.33, 1.42 (s, C*H*₃, H**10**, 12H); 1.90 (d, C*H*₂, H**6**, 4H, J=0.78); 2.19 (s, C*H*₃, H**9**, 6H); 6.70 (s, C*H*, H**3**, 2H); 7.22 (s, Ar, H**4**, 2H, J=0.78); 7.28 (s, Ar, H**8**, 2H, J=0.78).
¹³C-NMR (CD₂Cl₄, δ, ppm): 2.86 (Si-*C*H₃, 2C); 18.39 (*C*H₃, C**9**, 2C); 31.41 (*C*H₃, C**11**, 2C); 31.63, 31.64 (*C*H₃, C**10** e C**11**, 4C); 33.43 (*C*H₃, C**10**, 2C); 41.72, 41.75 (*C*, C**5** e C**7**, 4C); 57.50 (*C*H₂, C**6**, 2C); 81.77 (Ar, C**1**, 2C); 117.77 (Ar, C**8**, 2C); 118.40 (Ar, C**4**, 2C); 121.37 (Ar, C**3**, 2C); 127.21 (Ar, C**8a**, 2C); 133.44 (Ar, C**3a**, 2C); 134.64 (Ar, C**2**, 2C); 152.15 (Ar, C**7a**, 2C); 155.45 (Ar, C**4a**, 2C).

### Example 2

### Alternative route for the Synthesis of Me₂Si[2-Me-5,6(tetramethylcyclotrymethylen)indenyl]₂ZrCl₂[A1]

5.0 ml of a 2.5 M BuLi solution (Aldrich, 12.6 mmol) were slowly added to a suspension of 3.2 g of pure dimethyl-bis-(2,5,5,7,7-pentamethyl-1,5,6,7-tetrahydro-*s*-indacen-1-yl)-silane (experiment 20826/93, MW = 508.86, 6.3 mmol) in 40 ml of ether at 0° C. After 3 hours stirring at room temperature, the pale yellow suspension was added to a suspension of 1.50 g of ZrCl₄ in 40 ml of Pentane at 0° C. A yellow-orange suspension was formed. After 18 hours stirring at room temperature ¹H-NMR analysis showed the formation of the desired product (rac:meso = 60:40,), so the suspension was filtered. The yellow residue (3.6 g) was treated on the frit with toluene (≈ 300 ml). The filtrate was evaporated to dryness under reduced pressure to give 2.41 g of a yellow powder containing Me₂Si[2-Me-5,6(tetramethyltrimethylen)indenyl]₂ZrCl₂ (*rac*:*meso* = 61:39). The pale yellow residue on the frit was treated with 50 ml of toluene and filtered. 160 mg of pure *rac-*Me₂Si[2-Me-5,6(tetramethyltrimethylen)indenyl]₂ZrCl₂ were obtained from the filtrate. The total yield was 61.2 %. The rac isomer was used for the polymerization tests.

### Polymerization examples

### General procedures

The intrinsic viscosity (I.V.) was measured in tetrahydronaphtalene (THN) at 135°C

The molecular weight and the molecular weight distribution were determined on a WATERS 150 C using the following chromatographic conditions:

| | |
|---|---|
| Columns: | 3x SHODEX AT 806 MS; 1x SHODEX UT 807; 1x SHODEX AT-G; |
| Solvent: | 1,2,4 trichlorobenzene (+ 0.025% 2,6-Di-tert.Butyl-4-Methyl-Phenol); |
| Flow rate: | 0.6 - 1 ml/min; |
| Temperature: | 135 °C; |
| Detector: | INFRARED AT λ≅3.5µm; |
| Calibration: | Universal Calibration with PS-Standards. |

The melting points of the polymers (Tₘ) were measured by Differential Scanning Calorimetry (D.S.C.) on a Perkin Elmer DSC-7 instrument, according to the standard method. A weighted sample (5-10 mg) obtained from the polymerization was sealed into aluminum pans and heated to 180°C at 10°C/minute. The sample was kept at 180°C for 5 minutes to allow a complete melting of all the crystallites, then cooled to 20°C at 10°C/minute. After standing 2 minutes at 20°C, the sample was heated for the second time at 180°C with a scanning speed corresponding to 10°C/min. In this second heating run, the peak temperature was taken as the melting temperature (Tₘ) and the area of the peak as melting enthalpy (ΔH_{f}).

Rac dimethylsilylbis(2-methyl-4-phenyl-indenyl) zirconium dichloride [A-2] was prepared according to USP 5,786,432. Rac dimethylsilylbis(2-methyl-4, 5 benzo-indenyl) zirconium dichloride [A-3] was prepared according to USP 5,830,821.

### Polymerization Examples 1-3 and comparative examples 4-5:

### 1-butene homopolymerization

The catalyst mixture was prepared by dissolving the metallocene with the proper amount of the MAO solution in toluene (Al/Zr ratio reported in table 1), obtaining a solution which was stirred for 10 min at room temperature before being injected into the autoclave. A 4.25 litres steel autoclave, equipped with magnetically stirred anchor (stirring rate 550 rpm) and with a Flow Record & Control system (FRC) having maximum flow rate of 9000 g/hour for 1-butene, was purged with warm nitrogen (1.5 barg N₂, 70°C, 1 hour). 1-Butene was fed into the reactor (1350 g at 30°C) together with 6 mmol of Al(*i*-Bu)₃ (TIBA) (as a 1 M solution in hexane), and stirring was started. Subsequently, the reactor inner temperature was raised from 30°C to the polymerisation temperature (indicated in table 1). When pressure and temperature were constant, the catalytic solution was fed into the reactor with a nitrogen overpressure. The polymerisation was run for the time indicated in table 1 at the chosen polymerization temperature. Then the stirring was interrupted; the pressure into the autoclave was raised to 20 bar-g with nitrogen. The bottom discharge valve was opened and the 1-butene/poly-1-butene mixture was discharged into a heated steel tank containing water at 70°C. The tank heating was switched off and a flow of nitrogen at 0.5 bar-g was fed. After 1 hour cooling at room temperature the steel tank was opened and the wet polymer collected. The wet polymer was dried in an oven under reduced pressure at 70°C. The polymerization conditions and the characterization data of the obtained polymers were reported in Table 1.

**Table 1**

| Ex | met. (mg) | mmol Al | Al/Zr | T °C | time min | yield g | Activity kg/ (g_{met*}h) | I.V. dL/g | Tₘ(II) °C | ΔH_{f} J/g | M_{w} | M_{w}/Mₙ |
|---|---|---|---|---|---|---|---|---|---|---|---|---|
| 1 | A-1 (3) | 4.42 | 990 | 50 | 60 | 110 | 37 | 1.99 | 97.3 | 27 | 715600 | 2.4 |
| 2 | A-1 (3) | 4.42 | 990 | 70 | 60 | 310 | 103 | 1.44 | 92.7 | 27 | 356300 | 2.1 |
| 3 | A-1 (3) | 4.42 | 990 | 80 | 60 | 144 | 48 | 1.23 | 92.5 | 26 | 244600 | 2.2 |
| 4* | A-2 (4) | 6.29 | 990 | 70 | 60 | 50 | 12.5 | 0.81 | 102.3. | 28 | 152500 | 2.5 |
| 5* | A-3 (7.4) | 13.6 | 1060 | 70 | 120 | 244 | 16.5 | 0.95 | 91.5 | 29.5 | 177900 | 2.2 |

| | | | | | | | | | | | | |
|---|---|---|---|---|---|---|---|---|---|---|---|---|
| * comparative n.a. = not available | | | | | | | | | | | | |

## Claims

1. A process for preparing 1-butene polymers optionally containing up to 30% by mol of derived units of ethylene, propylene or an alpha olefin of formula CH₂=CHZ, wherein Z is a C₃-C₁₀ alkyl group, comprising polymerizing 1-butene and optionally ethylene, propylene or said alpha olefin, in the presence of a catalyst system obtainable by contacting:
a) at least a metallocene compound of formula (I): 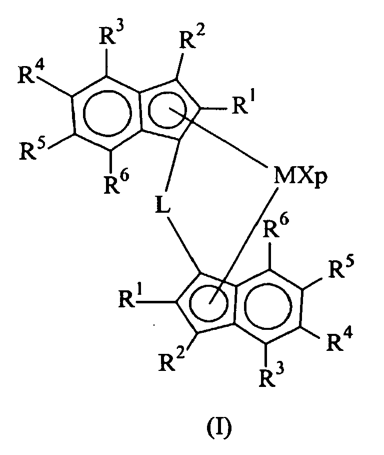 wherein:
M is an atom of a transition metal selected from those belonging to group 3, 4, 5, 6 or to the lanthanide or actinide groups in the Periodic Table of the Elements;
p is an integer from 0 to 3, being equal to the formal oxidation state of the metal M minus 2;
X, equal to or different from each other, are hydrogen atoms, halogen atoms, or R, OR, OSO₂CF₃, OCOR, SR, NR₂ or PR₂ groups, wherein R is a linear or branched, saturated or unsaturated C₁-C₂₀ alkyl, C₃-C₂₀ cycloalkyl, C₆-C₂₀ aryl, C₇-C₂₀ alkylaryl or C₇-C₂₀ arylalkyl radical, optionally containing heteroatoms belonging to groups 13-17 of the Periodic Table of the Elements; or two X can optionally form a substituted or unsubstituted butadienyl radical or a OR'O group wherein R' is a divalent radical selected from C₁-C₂₀ alkylidene, C₆-C₄₀ arylidene, C₇-C₄₀ alkylarylidene and C₇-C₄₀ arylalkylidene radicals;
R¹, equal to or different from each other, are linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing one or more heteroatoms belonging to groups 13-17 of the Periodic Table of the Elements;
R², R³ and R⁶, equal to or different from each other, are hydrogen atoms or linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing one or more heteroatoms belonging to groups 13-17 of the Periodic Table of the Elements;
R⁴ and R⁵, form together a condensed saturated or unsaturaded C₃-C₇ membered ring optionally containing heteroatoms belonging to groups 13-16 of the Periodic Table of the Elements; every atom forming said ring being substituted with R⁷ radicals wherein R⁷, equal to or different from each other, are hydrogen atoms or linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing one or more heteroatoms belonging to groups 13-17 of the Periodic Table of the Elements;
L is a divalent bridging group selected from C₁-C₂₀ alkylidene, C₃-C₂₀ cycloalkylidene, C₆-C₂₀ arylidene, C₇-C₂₀ alkylarylidene, or a C₇-C₂₀ arylalkylidene radical optionally containing heteroatoms belonging to groups 13-17 of the Periodic Table of the Elements, or a silylidene radical containing up to 5 silicon atoms; and
b) an alumoxane or a compound able to form an alkylmetallocene cation.

2. The process according to claim 1 wherein the catalyst system further comprises an organo aluminum compound.

3. The process according to claim 1 or 2, wherein in the compound of formula (I) M is titanium, zirconium or hafnium; X is a hydrogen atom, a halogen atom or a R group wherein R has the same meaning as in claim 1 and L is Si(R⁸)₂, wherein R⁸ is a linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radical.

4. The process according to anyone of claims 1 to 3 wherein R¹ is a C₁-C₂₀-alkyl radical; R², R³ and R⁶ are hydrogen atoms and R⁷ is a hydrogen atom or a linear or branched, saturated or unsaturated C₁-C₂₀-alkyl radical.

5. The process according to anyone of claims 1 to 4 wherein the compound of formula (I) has formula (IIa) or (IIb): 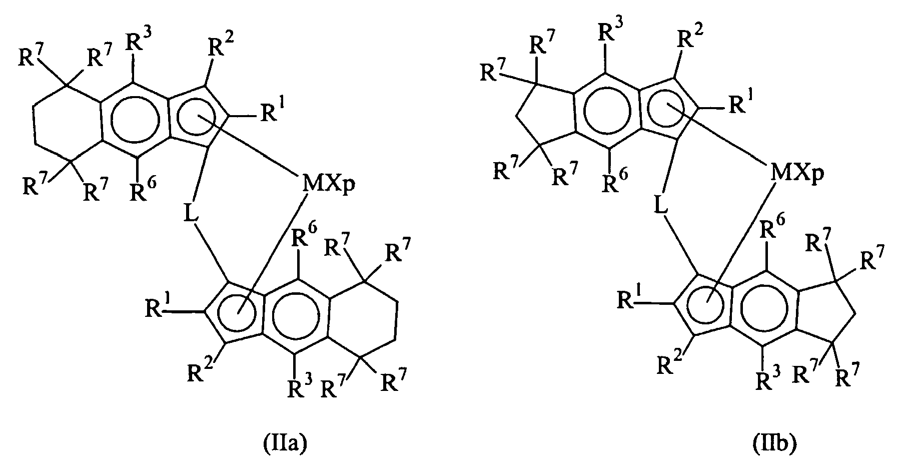 wherein:
M, X, p, L, R¹, R², R³, R⁶ and R⁷ have the same meaning as in claim 1.

6. The process according to anyone of claims 1 to 5 wherein 1-butene is homopolymerized.

7. A metallocene compound of formula (IIb): 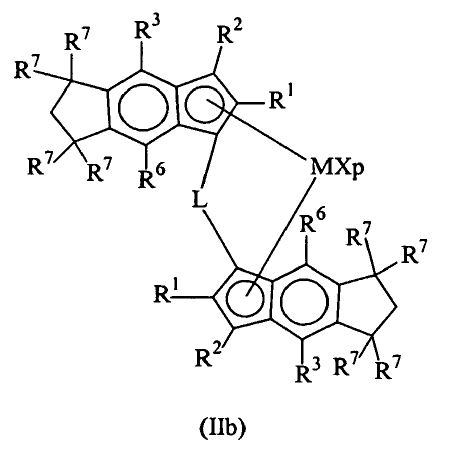 wherein M, p, L, R¹, R², R³, R⁶, R⁷ and X have the same meaning as in claim 1.

8. A ligand of formula (V) or its corresponding double bond isomer: 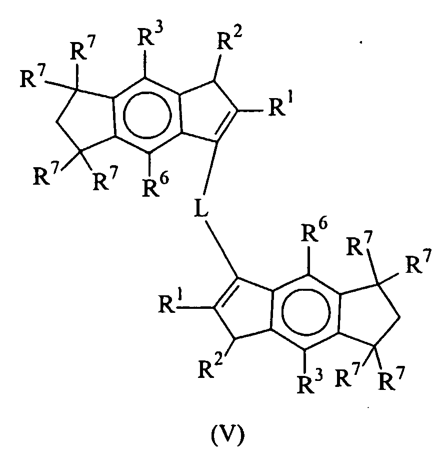 wherein L, R¹, R², R³, R⁶, and R⁷ have the same the same meaning as in claim 1.

9. A process for preparing the metallocene compound of formula (IIb): 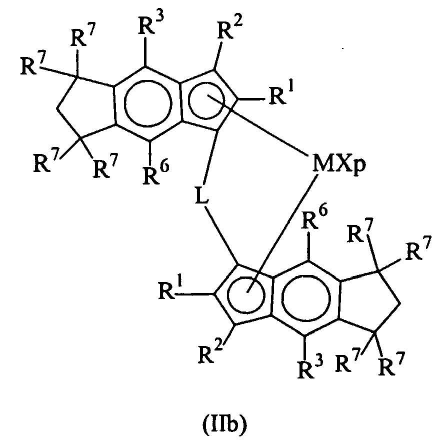 wherein M, p, L, R¹, R², R³, R⁶, R⁷ and X have the same meaning as in claim 1 comprising the following steps:
a) contacting a ligand of formula (V) 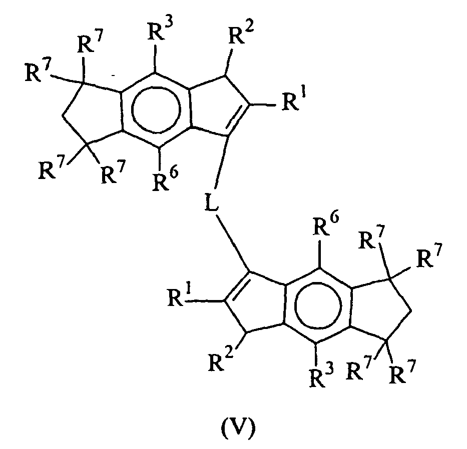 or its double bond isomer
wherein R¹, R², R³, R⁶, R⁷ and L have the same meaning as in claim 1 with a base of formula TⱼB or TMgT¹ , or sodium or potassium hydride, or metallic sodium or potassium; wherein B is an alkaline or alkali-earth metal and j is 1 or 2, j being equal to 1 when B is an alkaline metal, and j being equal to 2 when B is an alkali-earth metal; T is selected from the group consisting of linear or branched, saturated or unsaturated C₁-C₂₀ alkyl, C₃-C₂₀ cycloalkyl, C₆-C₂₀ aryl, C₇-C₂₀ alkylaryl or C₇-C₂₀ arylalkyl groups, optionally containing one or more Si or Ge atoms; T¹ is a halogen atom or a group OR" wherein R" is a linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing one or more heteroatoms belonging to groups 13-17 of the Periodic Table of the Elements; wherein the molar ratio between said base and the ligand of the formula (V) and is at least 2:1; and
b) contacting the product obtained in step a) with a compound of formula MX₄ wherein M and X have the same meaning as in claim 1.

10. A process for preparing the ligand of formula (V) 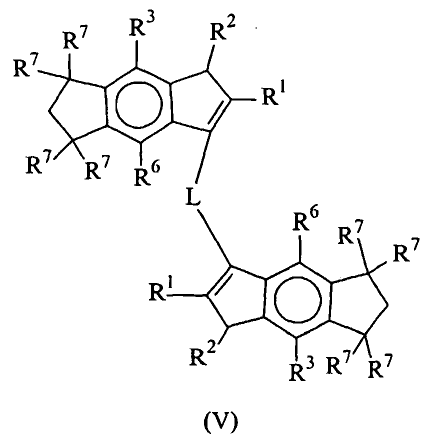 or its double bond isomer
wherein R¹, R², R³, R⁶, R⁷ and L have the same meaning as in claim 1, comprising the following steps:
a) contacting a compound of formula (VI): 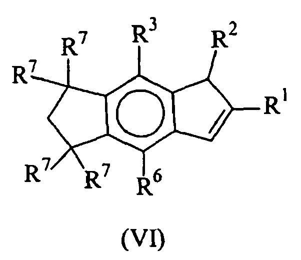 or its double bonds isomer
wherein: R¹, R², R³, R⁶, and R⁷ have the same the same meaning as in claim 1;
with a base of formula TⱼB or TMgT¹ , or sodium or potassium hydride, or metallic sodium or potassium; wherein B is an alkaline or alkali-earth metal and j is 1 or 2, j being equal to 1 when B is an alkaline metal, and j being equal to 2 when B is an alkali-earth metal; T is selected from the group consisting of linear or branched, saturated or unsaturated C₁-C₂₀ alkyl, C₃-C₂₀ cycloalkyl, C₆-C₂₀ aryl, C₇-C₂₀ alkylaryl or C₇-C₂₀ arylalkyl groups, optionally containing one or more Si or Ge atoms; T¹ is a halogen atom or a group OR" wherein R" is a linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing one or more heteroatoms belonging to groups 13-17 of the Periodic Table of the Elements; wherein the molar ratio of said base and the compound of the formula (VI) is at least 1:1;
b) contacting the obtained anionic compounds obtained in step a) with a compound of formula (VII): 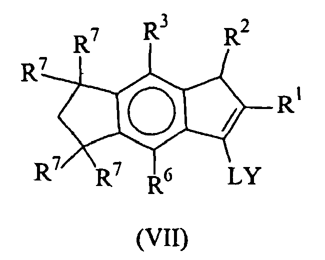 or its double bonds isomer
wherein R¹, R², R³, R⁶, R⁷ and L have the same the same meaning as in claim 1 and Y is a halogen radical selected from the group consisting of chloride, bromide and iodide.

11. A process for preparing the ligand of formula (V) when the substituents R¹, R², R³, R⁶ and R⁷ are the same in both the indenyl moieties comprising the following steps:
a) contacting a compound of formula (VI): 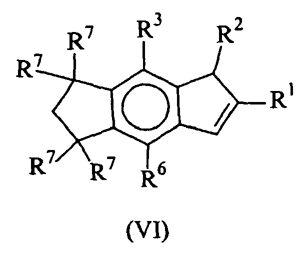 or its double bonds isomer
wherein: R¹, R², R³, R⁶ and R⁷ have the same the same meaning as in claim 1; with a base of formula TⱼB or TMgT¹ , or sodium or potassium hydride, or metallic sodium or potassium; wherein B is an alkaline or alkali-earth metal and j is 1 or 2, j being equal to 1 when B is an alkaline metal, and j being equal to 2 when B is an alkali-earth metal; T is selected from the group consisting of linear or branched, saturated or unsaturated C₁-C₂₀ alkyl, C₃-C₂₀ cycloalkyl, C₆-C₂₀ aryl, C₇-C₂₀ alkylaryl or C₇-C₂₀ arylalkyl groups, optionally containing one or more Si or Ge atoms; T¹ is a halogen atom or a group OR" wherein R" is a linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing one or more heteroatoms belonging to groups 13-17 of the Periodic Table of the Elements; wherein the molar ratio between said base and the compound of the formula (VI) is at least 1:1;
b) reacting the product obtained in step a) with a compound of formula YLY, wherein L and Y have the same the same meaning as in claim 9 wherein the molar ratio between the compound obtained in step a) and the compound of formula YLY is at least 2:1

## Patentansprüche

1. Verfahren zum Herstellen von 1-Buten-Polymeren, die gegebenenfalls bis zu 30 Mol% an Einheiten enthalten, die sich von Ethylen, Propylen oder einem alpha-Olefin der Formel CH₂=CHZ, wobei Z eine C₃-C₁₀-Alkylgruppe ist, ableiten, umfassend Polymerisieren von 1-Buten und gegebenenfalls Ethylen, Propylen oder dem alpha-Olefin in Gegenwart eines Katalysatorsystems, das erhältlich ist durch Kontaktieren:
a) mindestens einer Metallocenverbindung der Formel (I): 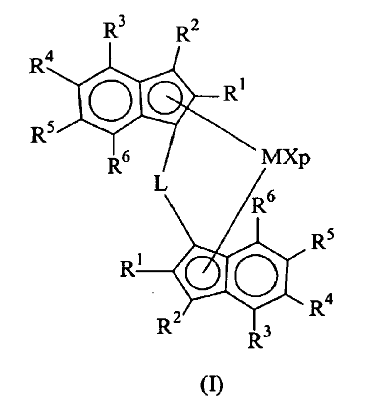 wobei:
M ein Atom eines Übergangsmetalls ist, ausgewählt aus jenen, die zur Gruppe 3, 4, 5, 6 oder der Gruppe der Lanthanoide oder Aktinoide des Periodensystems der Elemente gehören;
p eine ganze Zahl von 0 bis 3 ist, wobei es gleich dem formalen Oxidationszustand des Metalls M minus 2 ist;
X, die gleich oder verschieden voneinander sind, Wasserstoffatome, Halogenatome oder R-, OR-, OSO₂CF₃-, OCOR-, SR-, NR₂- oder PR₂-Gruppen sind, wobei R ein linearer oder verzweigter, gesättigter oder ungesättigter C₁-C₂₀-Alkyl-, C₃-C₂₀-Cycloalkyl-, C₆-C₂₀-Aryl-, C₇-C₂₀-Alkylaryl- oder C₇-C₂₀-Arylalkylrest ist, der gegebenenfalls Heteroatome enthält, die zu den Gruppen 13-17 des Periodensystems der Elemente gehören, oder zwei X gegebenenfalls einen substituierten oder unsubstituierten Butadienylrest bilden können oder eine OR'O-Gruppe, wobei R' ein zweiwertiger Rest ist, ausgewählt aus C₁-C₂₀-Alkyliden-, C₆-C₄₀-Aryliden-, C₇-C₄₀-Alkylaryliden- und C₇-C₄₀-Arylalkylidenresten;
R¹, die gleich oder verschieden voneinander sind, lineare oder verzweigte, gesättigte oder ungesättigte C₁-C₂₀-Alkyl-, C₃-C₂₀-Cycloalkyl-, C₆-C₂₀-Aryl-, C₇-C₂₀-Alkylaryl- oder C₇-C₂₀-Arylalkylreste sind, die gegebenenfalls ein oder mehrere Heteroatome enthalten, die zu den Gruppen 13-17 des Periodensystems der Elemente gehören;
R², R³ und R⁶, die gleich oder verschieden voneinander sind, Wasserstoffatome oder lineare oder verzweigte, gesättigte oder ungesättigte C₁-C₂₀-Alkyl-, C₃-C₂₀-Cycloalkyl-, C₆-C₂₀-Aryl-, C₇-C₂₀-Alkylaryl- oder C₇-C₂₀-Arylalkylreste sind, die gegebenenfalls ein oder mehrere Heteroatome enthalten, die zu den Gruppen 13-17 des Periodensystems der Elemente gehören;
R⁴ und R⁵ zusammen einen kondensierten gesättigten oder ungesättigten C₃-C₇-gliedrigen Ring bilden, der gegebenenfalls Heteroatome enthält, die zu den Gruppen 13-16 des Periodensystems der Elemente gehören, wobei jedes Atom, das den Ring bildet, mit Resten R⁷ substituiert ist, wobei R⁷, die gleich oder verschieden voneinander sind, Wasserstoffatome oder lineare oder verzweigte, gesättigte oder ungesättigte C₁-C₂₀-Alkyl-, C₃-C₂₀-Cycloalkyl-, C₆-C₂₀-Aryl-, C₇-C₂₀-Alkylaryl- oder C₇-C₂₀-Arylalkylreste sind, die gegebenenfalls ein oder mehrere Heteroatome enthalten, die zu den Gruppen 13-17 des Periodensystems der Elemente gehören;
L eine zweiwertige Brückengruppe ist, ausgewählt aus einem C₁-C₂₀-Alkyliden-, C₃-C₂₀-Cycloalkyliden-, C₆-C₂₀-Aryliden-, C₇-C₂₀-Alkylaryliden- oder einem C₇-C₂₀-Arylalkylidenrest, der gegebenenfalls Heteroatome enthält, die zu den Gruppen 13-17 des Periodensystems der Elemente gehören, oder ein Silylidenrest, der bis zu 5 Siliciumatome enthält; und
b) eines Alumoxans oder einer Verbindung, die in der Lage ist, ein Alkylmetallocenkation zu bilden.

2. Verfahren nach Anspruch 1, wobei das Katalysatorsystem ferner eine Organoaluminiumverbindung umfasst.

3. Verfahren nach Anspruch 1 oder 2, wobei in der Verbindung der Formel (I) M Titan, Zirconium oder Hafnium ist; X ein Wasserstoffatom, ein Halogenatom oder eine Gruppe R ist, wobei R die gleiche Bedeutung wie in Anspruch 1 hat; und L Si(R⁸)₂ ist, wobei R⁸ ein linearer oder verzweigter, gesättigter oder ungesättigter C₁-C₂₀-Alkyl-, C₃-C₂₀-Cycloalkyl-, C₆-C₂₀-Aryl-, C₇-C₂₀-Alkylaryl- oder C₇-C₂₀-Arylalkylrest ist.

4. Verfahren nach einem beliebigen der Ansprüche 1 bis 3, wobei R¹ ein C₁-C₂₀-Alkylrest ist; R², R³ und R⁶ Wasserstoffatome sind und R⁷ ein Wasserstoffatom oder ein linearer oder verzweigter, gesättigter oder ungesättigter C₁-C₂₀-Alkylrest ist.

5. Verfahren nach einem beliebigen der Ansprüche 1 bis 4, wobei die Verbindung der Formel (I) der Formel (IIa) oder (IIb) entspricht: 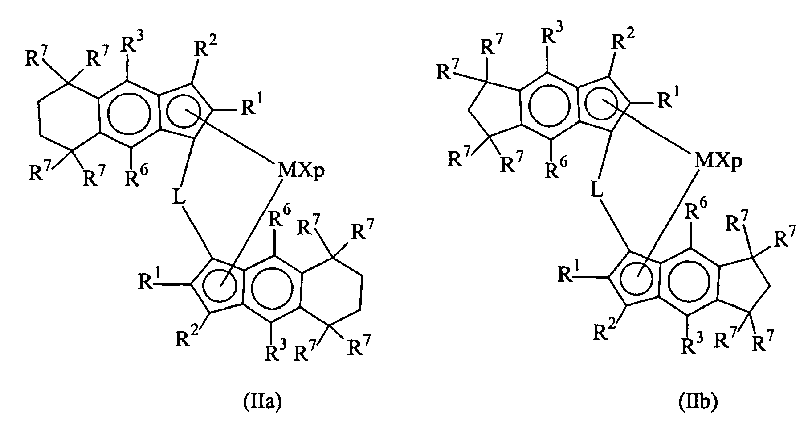 wobei:
M, X, p, L, R¹, R², R³, R⁶ und R⁷ die gleiche Bedeutung wie in Anspruch 1 haben.

6. Verfahren nach einem beliebigen der Ansprüche 1 bis 5, wobei 1-Buten homopolymerisiert wird.

7. Metallocenverbindung der Formel (IIb): 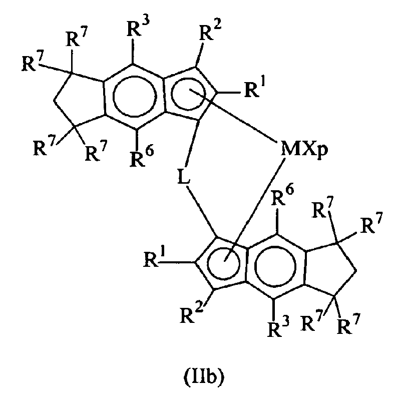 wobei M, p, L, R¹, R², R³, R⁶, R⁷ und X die gleiche Bedeutung wie in Anspruch 1 haben.

8. Ligand der Formel (V) oder dessen entsprechendes Doppelbindungsisomer: 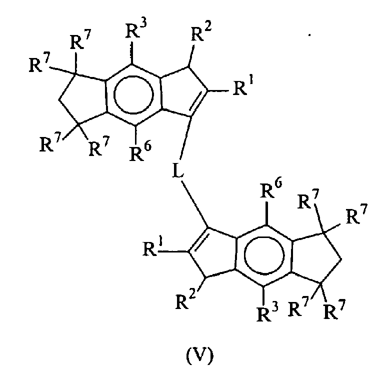 wobei L, R¹, R², R³, R⁶ und R⁷ die gleiche Bedeutung wie in Anspruch 1 haben.

9. Verfahren zum Herstellen der Metallocenverbindung der Formel (IIb): 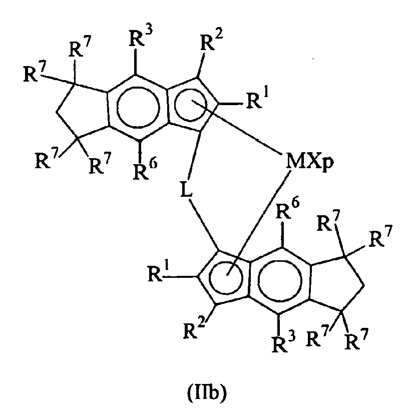 wobei M, p, L, R¹, R², R³, R⁶, R⁷ und X die gleiche Bedeutung wie in Anspruch 1 haben, das die folgenden Schritte umfasst:
a) Kontaktieren eines Liganden der Formel (V) 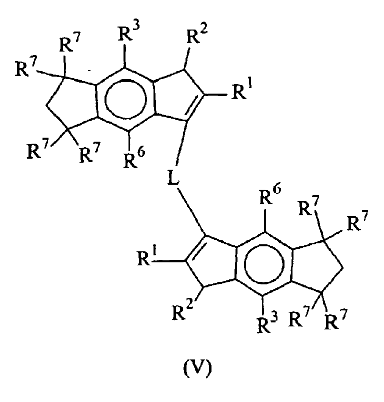 oder dessen Doppelbindungsisomer,
wobei R¹, R², R³, R⁶, R⁷ und L die gleiche Bedeutung wie in Anspruch 1 haben, mit einer Base der Formel TⱼB oder TMgT¹ oder Natrium- oder Kaliumhydrid oder metallischem Natrium oder Kalium, wobei B ein Alkali- oder Erdalkalimetall und j 1 oder 2 ist, wobei j gleich 1 ist, wenn B ein Alkalimetall ist, und j gleich 2 ist, wenn B ein Erdalkalimetall ist; T ausgewählt ist aus der Gruppe, bestehend aus linearen oder verzweigten, gesättigten oder ungesättigten C₁-C₂₀-Alkyl-, C₃-C₂₀-Cycloalkyl-, C₆-C₂₀-Aryl-, C₇-C₂₀-Alkylaryl- oder C₇-C₂₀-Arylalkylgruppen, die gegebenenfalls ein oder mehrere Si- oder Ge-Atome enthalten; T¹ ein Halogenatom oder eine Gruppe OR" ist, wobei R" ein linearer oder verzweigter, gesättigter oder ungesättigter C₁-C₂₀-Alkyl-, C₃-C₂₀-Cycloalkyl-, C₆-C₂₀-Aryl-, C₇-C₂₀-Alkylaryl- oder C₇-C₂₀-Arylalkylrest ist, der gegebenenfalls ein oder mehrere Heteroatome enthält, die zu den Gruppen 13-17 des Periodensystems der Elemente gehören, wobei das Molverhältnis zwischen der Base und dem Liganden der Formel (V) mindestens 2:1 beträgt; und
b) Kontaktieren des Produkts, das in Schritt a) erhalten wurde, mit einer Verbindung der Formel MX₄, wobei M und X die gleiche Bedeutung wie in Anspruch 1 haben.

10. Verfahren zum Herstellen des Liganden der Formel (V) 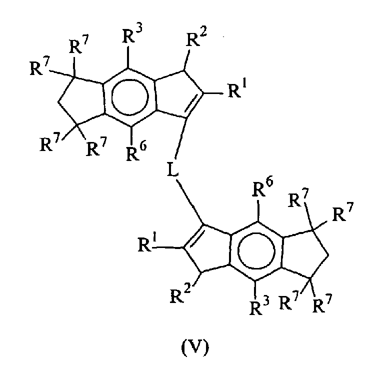 oder dessen Doppelbindungsisomers,
wobei R¹, R², R³, R⁶, R⁷ und L die gleiche Bedeutung wie in Anspruch 1 haben, das die folgenden Schritte umfasst:
a) Kontaktieren einer Verbindung der Formel (VI): 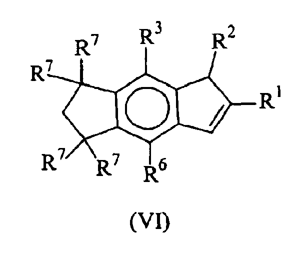 oder deren Doppelbindungsisomer,
wobei: R¹, R², R³, R⁶ und R⁷ die gleiche Bedeutung wie in Anspruch 1 haben,
mit einer Base der Formel TⱼB oder TMgT¹ oder Natrium- oder Kaliumhydrid oder metallischem Natrium oder Kalium, wobei B ein Alkali- oder Erdalkalimetall und j 1 oder 2 ist, wobei j gleich 1 ist, wenn B ein Alkalimetall ist, und j gleich 2 ist, wenn B ein Erdalkalimetall ist; T ausgewählt ist aus der Gruppe, bestehend aus linearen oder verzweigten, gesättigten oder ungesättigten C₁-C₂₀-Alkyl-, C₃-C₂₀-Cycloalkyl-, C₆-C₂₀-Aryl-, C₇-C₂₀-Alkylaryl- oder C₇-C₂₀-Arylalkylgruppen, die gegebenenfalls ein oder mehrere Si- oder Ge-Atome enthalten; T¹ ein Halogenatom oder eine Gruppe OR" ist, wobei R" ein linearer oder verzweigter, gesättigter oder ungesättigter C₁-C₂₀-Alkyl-, C₃-C₂₀-Cycloalkyl-, C₆-C₂₀-Aryl-, C₇-C₂₀-Alkylaryl- oder C₇-C₂₀-Arylalkylrest ist, der gegebenenfalls ein oder mehrere Heteroatome enthält, die zu den Gruppen 13-17 des Periodensystems der Elemente gehören; wobei das Molverhältnis zwischen der Base und der Verbindung der Formel (VI) mindestens 1:1 beträgt;
b) Kontaktieren der erhaltenen anionischen Verbindungen, die in Schritt a) erhalten wurden, mit einer Verbindung der Formel (VII): 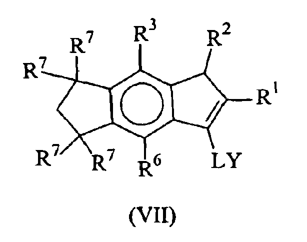 oder deren Doppelbindungsisomer,
wobei R¹, R², R³, R⁶, R⁷ und L die gleiche Bedeutung wie in Anspruch 1 haben und Y ein Halogenrest ist, ausgewählt aus der Gruppe, bestehend aus Chlorid, Bromid und Iodid.

11. Verfahren zum Herstellen des Liganden der Formel (V), das, wenn die Substituenten R¹, R², R³, R⁶ und R⁷ die gleichen sind in beiden Indenyleinheiten, die folgenden Schritte umfasst:
a) Kontaktieren einer Verbindung der Formel (VI): 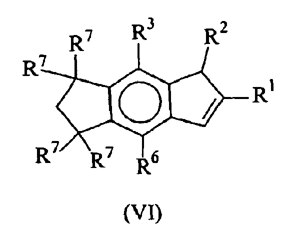 oder deren Doppelbindungsisomer,
wobei: R¹, R², R³, R⁶ und R⁷ die gleiche Bedeutung wie in Anspruch 1 haben, mit einer Base der Formel TⱼB oder TMgT¹ oder Natrium- oder Kaliumhydrid oder metallischem Natrium oder Kalium, wobei B ein Alkali- oder Erdalkalimetall und j 1 oder 2 ist, wobei j gleich 1 ist, wenn B ein Alkalimetall ist, und j gleich 2 ist, wenn B ein Erdalkalimetall ist; T ausgewählt ist aus der Gruppe, bestehend aus linearen oder verzweigten, gesättigten oder ungesättigten C₁-C₂₀-Alkyl-, C₃-C₂₀-Cycloalkyl-, C₆-C₂₀-Aryl-, C₇-C₂₀-Alkylaryl- oder C₇-C₂₀-Arylalkylgruppen, die gegebenenfalls ein oder mehrere Si- oder Ge-Atome enthalten; T¹ ein Halogenatom oder eine Gruppe OR" ist, wobei R" ein linearer oder verzweigter, gesättigter oder ungesättigter C₁-C₂₀-Alkyl-, C₃-C₂₀-Cycloalkyl-, C₆-C₂₀-Aryl-, C₇-C₂₀-Alkylaryl- oder C₇-C₂₀-Arylalkylrest ist, der gegebenenfalls ein oder mehrere Heteroatome enthält, die zu den Gruppen 13-17 des Periodensystems der Elemente gehören; wobei das Molverhältnis zwischen der Base und der Verbindung der Formel (VI) mindestens 1:1 beträgt;
b) Reagieren des Produkts, das in Schritt a) erhalten wurde, mit einer Verbindung der Formel YLY,
wobei L und Y die gleiche Bedeutung wie in Anspruch 9 haben; wobei das Molverhältnis zwischen der Verbindung, die in Schritt a) erhalten wurde, und der Verbindung der Formel YLY mindestens 2:1 beträgt.

## Revendications

1. Processus de préparation de polymères de 1-butène contenant facultativement jusqu'à 30 % en moles d'unités dérivées d'éthylène, de propylène ou d'une alpha oléfine de formule CH₂=CHZ, dans laquelle Z est un groupe alkyle en C₃-C₁₀, qui comprend la polymérisation de 1-butène et facultativement d'éthylène, de propylène ou de ladite alpha oléfine, en présence d'un système de catalyseur pouvant être obtenu par mise en contact :
a) d'au moins un composé métallocène de formule (I) : 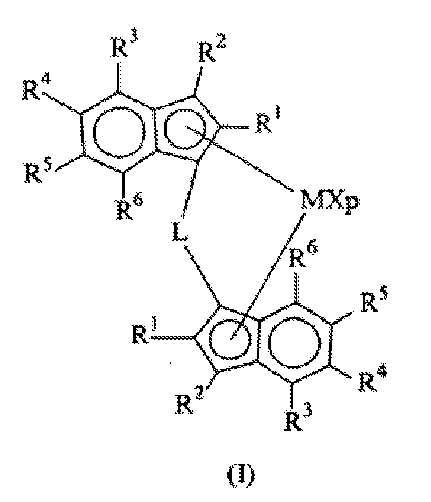 dans laquelle :
M est un atome d'un métal de transition choisi parmi ceux appartenant aux groupes 3, 4, 5, 6 ou aux groupes lanthanide ou actidine dans le tableau périodique des éléments ;
p est un nombre entier de 0 à 3, étant égal à l'état d'oxydation formel du métal M moins 2 ;
X, identiques ou différents les uns des autres, sont des atomes d'hydrogène, des atomes d'halogène, ou des groupes R, OR, OSO₂CF₃, OCOR, SR, NR₂ ou PR₂, dans lesquels R est un radical alkyle en C₁₋C₂₀, cycloalkyle en C₃-C₂₀, aryle en C₆-C₂₀, alkylaryle en C₇-C₂₀ ou arylalkyle en C₇-C₂₀ linéaire ou ramifié, saturé ou insaturé, contenant facultativement des hétéroatomes appartenant aux groupes 13 à 17 du tableau périodique des éléments ; ou deux X peuvent facultativement former un radical butadiényle substitué ou non substitué ou un groupe OR'O dans lequel R' est un radical bivalent choisi parmi les radicaux alkylidène en C₁-C₂₀, arylidène en C₆-C₄₀, alkylarylidène en C₇-C₄₀ et arylalkylidène en C₇-C₄₀ ;
R¹, identiques ou différents les uns des autres, sont des radicaux alkyle en C₁-C₂₀, cycloalkyle en C₃-C₂₀, aryle en C₆-C₂₀, alkylaryle en C₇-C₂₀ ou arylalkyle en C₇-C₂₀ linéaires ou ramifiés, saturés ou insaturés, contenant facultativement un ou plusieurs hétéroatomes appartenant aux groupes 13 à 17 du tableau périodique des éléments ;
R², R³ et R⁶, identiques ou différents les uns des autres, sont des atomes d'hydrogène ou des radicaux alkyle en C₁-C₂₀, cycloalkyle en C₃-C₂₀, aryle en C₆-C₂₀, alkylaryle en C₇-C₂₀ ou arylalkyle en C₇-C₂₀ linéaires ou ramifiés, saturés ou insaturés, contenant facultativement un ou plusieurs hétéroatomes appartenant aux groupes 13 à 17 du tableau périodique des éléments ;
R⁴ et R⁵, forment ensemble un cycle à chaînons en C₃-C₇ condensé saturé ou insaturé contenant facultativement des hétéroatomes appartenant aux groupes 13 à 16 du tableau périodique des éléments ; chacun des atomes formant ledit cycle étant substitué avec des radicaux R⁷ où R⁷, identiques ou différents les uns des autres, sont des atomes d'hydrogène ou des radicaux alkyle en C₁-C₂₀, cycloalkyle en C₃-C₂₀, aryle en C₆-C₂₀, alkylaryle en C₇-C₂₀ ou arylalkyle en C₇-C₂₀ linéaires ou ramifiés, saturés ou insaturés, contenant facultativement un ou plusieurs hétéroatomes appartenant aux groupes 13 à 17 du tableau périodique des éléments ;
L est un groupe de liaison bivalent choisi parmi un radical alkylidène en C₁-C₂₀, cycloalkylidène en C₃-C₂₀, arylidène en C₆-C₂₀, alkylarylidène en C₇-C₂₀ ou arylalkylidène en C₇-C₂₀, contenant facultativement des hétéroatomes appartenant aux groupes 13 à 17 du tableau périodique des éléments, ou un radical silylidène contenant jusqu'à 5 atomes de silicium ; et
b) un alumoxane ou un composé capable de former un cation alkylmétallocène.

2. Processus selon la revendication 1, dans lequel le système de catalyseur comprend en outre un composé d'aluminium organique.

3. Processus selon la revendication 1 ou 2, dans lequel dans le composé de formule (I), M est le titane, le zirconium ou l'hafnium ; X est un atome d'hydrogène, un atome d'halogène ou un groupe R dans lequel R a la même signification que dans la revendication 1 et L est Si(R⁸)₂, où R⁸ est un radical alkyle en C₁-C₂₀, cycloalkyle en C₃-C₂₀, aryle en C₆-C₂₀, alkylaryle en C₇-C₂₀ ou arylalkyle en C₇-C₂₀ linéaire ou ramifié, saturé ou insaturé.

4. Processus selon l'une quelconque des revendications 1 à 3, dans lequel R¹ est un radical alkyle en C₁-C₂₀ ; R², R³ et R⁶ sont des atomes d'hydrogène et R⁷ est un atome d'hydrogène ou un radical alkyle en C₁-C₂₀ linéaire ou ramifié, saturé ou insaturé.

5. Processus selon l'une quelconque des revendications 1 à 4, dans lequel le composé de formule (I) répond à la formule (IIa) ou (IIb) : 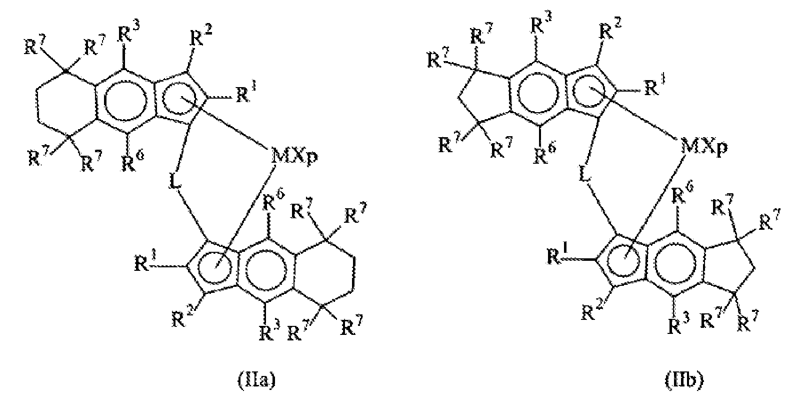 dans lesquelles :
M, X, p, L, R¹, R², R³, R⁶ et R⁷ ont la même signification que dans la revendication 1.

6. Processus selon l'une quelconque des revendications 1 à 5, dans lequel le 1-butène est homopolymérisé.

7. Composé métallocène de formule (IIb) : 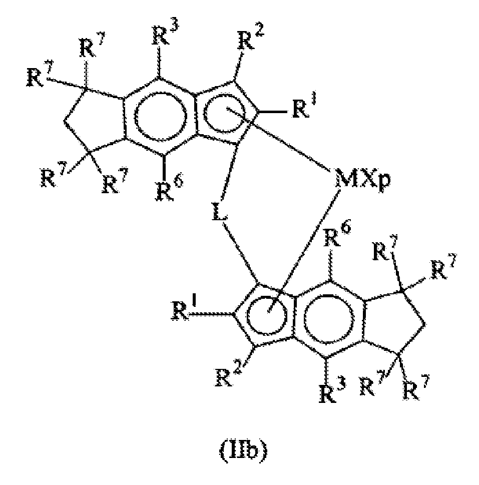 dans laquelle M, p, L, R¹, R², R³, R⁶, R⁷ et X ont la même signification que dans la revendication 1.

8. Ligand de formule (V) ou son isomère à double liaison correspondant : 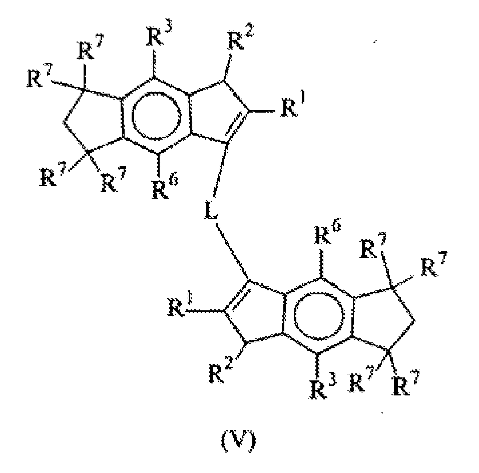 dans laquelle L, R¹, R², R³, R⁶ et R⁷ ont la même signification que dans la revendication 1.

9. Processus de préparation du composé métallocène de formule (IIb) : 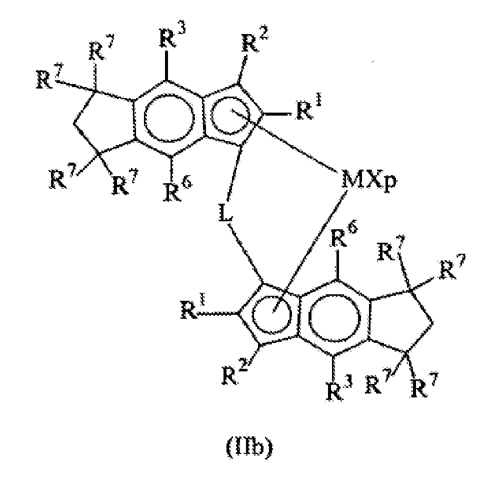 dans laquelle M, p, L, R¹, R², R³, R⁶, R⁷ et X ont la même signification que dans la revendication 1, comprenant les étapes suivantes :
a) la mise en contact d'un ligand de formule (V) 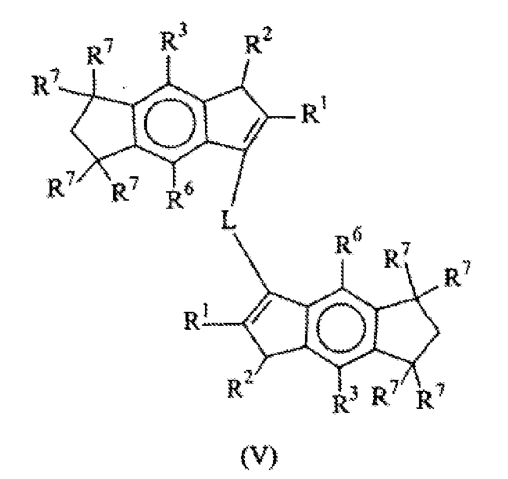 ou de son isomère à double liaison
dans laquelle R¹, R², R³, R⁶, R⁷ et L ont la même signification que dans la revendication 1, avec une base de formule TⱼB ou TMgT¹, ou un hydrure de sodium ou de potassium, ou du sodium ou potassium métallique ; dans laquelle B est un métal alcalin ou alcalino-terreux et j vaut 1 ou 2, j étant égal à 1 lorsque B est un métal alcalin, et j étant égal à 2 lorsque B est un métal alcalino-terreux ; T est choisi dans le groupe constitué par les groupes alkyle en C₁-C₂₀, cycloalkyle en C₃-C₂₀, aryle en C₆-C₂₀, alkylaryle en C₇-C₂₀ ou arylalkyle en C₇-C₂₀ linéaires ou ramifiés, saturés ou insaturés, contenant facultativement un ou plusieurs atomes de Si ou Ge ; T¹ est un atome d'halogène ou un groupe OR" dans lequel R" est un radical alkyle en C₁-C₂₀, cycloalkyle en C₃-C₂₀, aryle en C₆-C₂₀, alkylaryle en C₇-C₂₀ ou arylalkyle en C₇-C₂₀ linéaire ou ramifié, saturé ou insaturé, contenant facultativement un ou plusieurs hétéroatomes appartenant aux groupes 13 à 17 du tableau périodique des éléments ; dans lequel le rapport molaire entre ladite base et le ligand de formule (V) est d'au moins 2/1 ; et
b) la mise en contact du produit obtenu dans l'étape a) avec un composé de formule MX₄ dans laquelle M et X ont la même signification que dans la revendication 1.

10. Processus de préparation d'un ligand de formule (V) 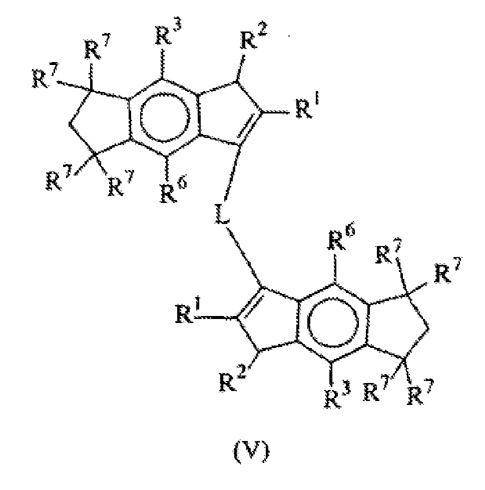 ou de son isomère à double liaison
dans laquelle R¹, R², R³, R⁶, R⁷ et L ont la même signification que dans la revendication 1, comprenant les étapes suivantes :
a) la mise en contact d'un composé de formule (VI) : 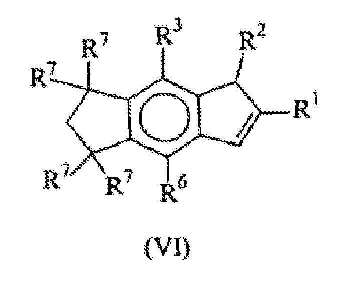 ou de son isomère à doubles liaisons
dans laquelle : R¹, R², R³, R⁶ et R⁷ ont la même signification que dans la revendication 1 ;
avec une base de formule TⱼB ou TMgT¹, ou un hydrure de sodium ou de potassium, ou du sodium ou potassium métallique ; dans laquelle B est un métal alcalin ou alcalino-terreux et j vaut 1 ou 2, j étant égal à 1 lorsque B est un métal alcalin, et j étant égal à 2 lorsque B est un métal alcalino-terreux ; T est choisi dans le groupe constitué par les groupes alkyle en C₁-C₂₀, cycloalkyle en C₃-C₂₀, aryle en C₆-C₂₀, alkylaryle en C₇-C₂₀ ou arylalkyle en C₇-C₂₀ linéaires ou ramifiés, saturés ou insaturés, contenant facultativement un ou plusieurs atomes de Si ou Ge ; T¹ est un atome d'halogène ou un groupe OR" dans lequel R" est un radical alkyle en C₁-C₂₀, cycloalkyle en C₃-C₂₀, aryle en C₆-C₂₀, alkylaryle en C₇-C₂₀ ou arylalkyle en C₇-C₂₀ linéaire ou ramifié, saturé ou insaturé, contenant facultativement un ou plusieurs hétéroatomes appartenant aux groupes 13 à 17 du tableau périodique des éléments ; dans lequel le rapport molaire de ladite base sur le composé de formule (VI) est d'au moins 1/1 ;
b) la mise en contact des composés anioniques obtenus dans l'étape a) avec un composé de formule (VII) : 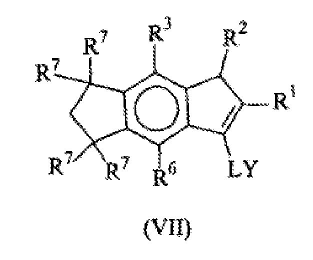 ou son isomère à doubles liaisons
dans laquelle R¹, R², R³, R⁶, R⁷ et L ont la même signification que dans la revendication 1 et Y est un radical halogène choisi dans le groupe constitué par le chlorure, le bromure et l'iodure.

11. Processus de préparation d'un ligand de formule (V) lorsque les substituants R¹, R², R³, R⁶ et R⁷ sont identiques dans les deux fractions indényle, qui comprend les étapes suivantes :
a) la mise en contact d'un composé de formule (VI) : 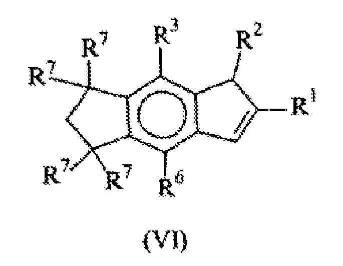 ou de son isomère à doubles liaisons
dans laquelle : R¹, R², R³, R⁶ et R⁷ ont la même signification que dans la revendication 1 ; avec une base de formule TⱼB ou TMgT¹, ou un hydrure de sodium ou de potassium, ou du sodium ou potassium métallique ; dans laquelle B est un métal alcalin ou alcalino-terreux et j vaut 1 ou 2, j étant égal à 1 lorsque B est un métal alcalin, et j étant égal à 2 lorsque B est un métal alcalino-terreux ; T est choisi dans le groupe constitué par les groupes alkyle en C₁-C₂₀, cycloalkyle en C₃-C₂₀, aryle en C₆-C₂₀, alkylaryle en C₇-C₂₀ ou arylalkyle en C₇-C₂₀ linéaires ou ramifiés, saturés ou insaturés, contenant facultativement un ou plusieurs atomes de Si ou Ge ; T¹ est un atome d'halogène ou un groupe OR" dans lequel R" est un radical alkyle en C₁-C₂₀, cycloalkyle en C₃-C₂₀, aryle en C₆-C₂₀, alkylaryle en C₇-C₂₀ ou arylalkyle en C₇-C₂₀ linéaire ou ramifié, saturé ou insaturé, contenant facultativement un ou plusieurs hétéroatomes appartenant aux groupes 13 à 17 du tableau périodique des éléments ; dans lequel le rapport molaire entre ladite base et le composé de formule (VI) est d'au moins 1/1 ;
b) la réaction du produit obtenu dans l'étape a) avec un composé de formule YLY, dans laquelle L et Y ont la même signification que dans la revendication 9, dans laquelle le rapport molaire entre le composé obtenu dans l'étape a) et le composé de formule YLY est au moins 2/1.
